(19)

Europäisches
Patentamt
European
Patent Office
Office européen
des brevets

(11) **EP 4 006 071 A1**

(12) **EUROPEAN PATENT APPLICATION**
published in accordance with Art. 153(4) EPC

(43) Date of publication:
**01.06.2022 Bulletin 2022/22**

(21) Application number: **20843315.1**

(22) Date of filing: **22.07.2020**

(51) International Patent Classification (IPC):
*C08F 265/06* (2006.01)    *C08L 33/08* (2006.01)
*C08L 33/10* (2006.01)    *C08L 33/12* (2006.01)
*C08L 51/04* (2006.01)    *C08L 53/00* (2006.01)
*C08J 5/00* (2006.01)    *C08J 5/18* (2006.01)
*B29C 48/08* (2019.01)    *B29C 48/92* (2019.01)

(52) Cooperative Patent Classification (CPC):
**B29C 48/08; B29C 48/92; C08F 265/06; C08J 5/00;
C08J 5/18; C08L 33/08; C08L 33/10; C08L 33/12;
C08L 51/04; C08L 53/00**

(86) International application number:
**PCT/JP2020/028397**

(87) International publication number:
**WO 2021/015226 (28.01.2021 Gazette 2021/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.07.2019 JP 2019137232
25.09.2019 JP 2019173842**

(71) Applicant: **Kuraray Co., Ltd.
Kurashiki-shi, Okayama 710-0801 (JP)**

(72) Inventors:
• **KODERA, Jumpei
Tainai-shi, Niigata 959-2691 (JP)**
• **KIKUKAWA, Yusuke
Tainai-shi, Niigata 959-2691 (JP)**

(74) Representative: **Müller-Boré & Partner
Patentanwälte PartG mbB
Friedenheimer Brücke 21
80639 München (DE)**

(54) **METHACRYLIC MELT-EXTRUSION MOLDED ARTICLE**

(57)    The present invention provides a methacrylic melt-extrusion-molded article comprising a methacrylic resin (A) that contains 80 mass% or more of a methyl methacrylate unit and that has a weight average molecular weight of 50,000 or more to 500,000 or less; an acrylic multilayered polymer (B) that contains at least one rubber component layer (b1) inside the polymer and that further comprises at least one thermoplastic resin component layer (b2), wherein the outermost part of the polymer comprises the thermoplastic resin component layer (b2), and the rubber component layer (b1) has an average particle size in the range of 0.05 to 0.15 μm; and an acrylic block copolymer (C) that contains a methacrylic acid ester polymer block (c1) and an acrylic acid ester polymer block (c2), wherein the molded article has an acetone-insoluble content of 1 to 60 mass%, and the acrylic acid ester polymer block (c2) is in the form of spheres or cylinders in a cross-section parallel to the extrusion direction of the molded article, the spheres or the cylinders have a short axis diameter of 1 nm or more and 100 nm or less, and the cylinders have a length of 10 nm or more and 500 nm or less.

Fig. 2

**Description**

Technical Field

Cross-Reference to Related Applications

This application claims priority to Japanese Patent Application No. 2019-137232 filed on July 25, 2019 and Japanese Patent Application No. 2019-173842 filed on September 25, 2019 (the disclosures of which are incorporated herein by reference).

The present invention relates to a methacrylic melt-extrusion-molded article. More precisely, the present invention relates to a methacrylic melt-extrusion-molded article that is suitable for use in decoration and use as a building material and that has excellent transparency, surface smoothness, bending whitening resistance, pencil hardness, bendability, moldability, and post-molding appearance.

Background Art

Molded articles of methacrylic resin have excellent optical properties such as transparency, weather resistance, and beautiful appearance; therefore, the molded articles have been used for decorative purposes such as automobile interiors and exteriors and building materials. Methacrylic resin film, which has excellent weatherability, transparency, pencil hardness, and surface smoothness, has been previously used as a surface protection film to protect decorative layers such as printing layers and to add a sense of luxury and depth to designs. In recent years, molded articles of methacrylic resin have been increasingly applied to components molded into three-dimensional shapes. Problems during 3D molding include stress whitening during molding, increased surface haze, cracking, etc. In addition to the properties described above, the surface protection layer must have stress whitening resistance, surface smoothness, plasticity, and bending resistance.

A method of using crosslinked rubber polymer particles having a particle diameter of 0.1 $\mu$m or less as a material for forming a resin molded article with excellent whitening resistance during molding is disclosed (Patent Literature (PTL) 1). However, it was difficult to inhibit cracking during molding while maintaining a high surface hardness by using only crosslinked polymer particles or a block copolymer having a small particle size.

To produce a film with excellent stress whitening resistance and excellent pencil hardness, a method of using rubber polymer particles having a particle diameter of 0.07 $\mu$m or less (Patent Literature (PTL) 1), and a method of using a block copolymer as rubber particles (Patent Literature (PTL) 2) are disclosed. However, it was difficult to inhibit cracking during molding while maintaining a high surface hardness by using only polymer particles having a small diameter.

To produce a film with excellent pencil hardness, stress whitening resistance, and crack resistance, a method of using crosslinked elastic particles having two different particle sizes, one with a large particle size of 0.2 to 0.4 $\mu$m and the other with a small particle size of 0.18 $\mu$m, is disclosed (Patent Literature (PTL) 3 and 4). However, adding even a small amount of elastic particles with a large particle diameter of 0.2 $\mu$m or more is known to impair the surface smoothness and deteriorates the haze of the film. Excellent film performance in terms of all of transparency, surface smoothness, pencil hardness, stress whitening resistance, and crack resistance has yet to be achieved.

Citation List

Patent Literature

    PTL 1: JP2001-316557A
    PTL 2: WO2016/157908
    PTL 3: JP2003-183471A
    PTL 4: WO2013/051239

Summary of Invention

Technical Problem

An object of the present invention is to provide a methacrylic melt-extrusion-molded article that is suitable for use in decoration and that has excellent transparency, surface smoothness, bending whitening resistance, pencil hardness, bendability, moldability, and post-molding appearance.

Solution to Problem

As a result of research to achieve the above object, the present inventors have completed the present invention, including the following embodiments.

[1] A methacrylic melt-extrusion-molded article comprising

a methacrylic resin (A) that contains 80 mass% or more of a methyl methacrylate unit and that has a weight average molecular weight of 50,000 or more and 500,000 or less;
an acrylic multilayered polymer (B) that contains at least one rubber component layer (b1) inside the polymer and that further comprises at least one thermoplastic resin component layer (b2), wherein the outermost part of the polymer comprises the thermoplastic resin component layer (b2), and the rubber component layer (b1) has an average particle size in the range of 0.05 to 0.15 $\mu$m; and
an acrylic block copolymer (C) that contains a methacrylic acid ester polymer block (c1) and an acrylic acid ester polymer block (c2),
wherein the molded article has an acetone-insoluble content of 1 to 60 mass%, and
the acrylic acid ester polymer block (c2) is in the form of spheres or cylinders in a cross-section parallel to the extrusion direction of the molded article, wherein the spheres have a diameter of 1 nm or more and 100 nm or less and the cylinders have a short axis diameter of 1 nm or more and 100 mn or less and a length of 10 nm or more and 500 nm or less.

[2] The methacrylic melt-extrusion-molded article according to [1],

wherein the rubber component (b1) of the acrylic multilayered polymer (B) comprises a copolymer comprising 50 to 98.99 mass% of an acrylic acid ester monomer unit, 1 to 44.99 mass% of at least one additional monofunctional monomer unit, and 0.01 to 10 mass% of a polyfunctional monomer unit; and
the thermoplastic resin component layer (b2) of the acrylic multilayered polymer (B) comprises a copolymer comprising 40 to 100 mass% of a methacrylic acid ester monomer unit and 60 to 0 mass% of at least one additional monomer unit.

[3] The methacrylic melt-extrusion-molded article according to [1],

wherein the acrylic block copolymer (C) comprises at least one methacrylic acid ester polymer block (c1) and at least one acrylic acid ester polymer block (c2);
the methacrylic acid ester polymer block (c1) is present in an amount of 30 to 60 mass% and the acrylic acid ester polymer block (c2) is present in an amount of 40 to 70 mass% in the acrylic block copolymer (C); and
the methacrylic melt-extrusion-molded article contains the acrylic block copolymer (C) in an amount of 1 to 15 mass%.

[4] The methacrylic melt-extrusion-molded article according to [1], wherein the methacrylic melt-extrusion-molded article has a thickness of 20 to 200 $\mu$m.
[5] The methacrylic melt-extrusion-molded article according to any one of [1] to [4], further comprising a delusterant.
[6] The methacrylic melt-extrusion-molded article according to any one of [1] to [5], further comprising a functional layer.
[7] The methacrylic melt-extrusion-molded article according to any one of [1] to [6], wherein the methacrylic melt-extrusion-molded article comprises a film and is formed of a laminate of the film and at least one additional thermoplastic resin film.
[8] The methacrylic melt-extrusion-molded article according to any one of [1] to [7], which is for use in decoration.
[9] The methacrylic melt-extrusion-molded article according to any one of [1] to [7], which is for use as a building material.
[10] A method for producing a methacrylic melt-extrusion-molded article, the method comprising the step of melt-extruding a methacrylic resin composition using a T-die,

wherein the methacrylic resin composition comprises
a methacrylic resin (A) that contains 80 mass% or more of a methyl methacrylate unit and that has a weight average molecular weight of 50000 or more and 500000 or less;
an acrylic multilayered polymer (B) that contains at least one rubber component layer (b1) inside the polymer and that further comprises at least one thermoplastic resin component layer (b2), wherein the outermost part of the polymer comprises the thermoplastic resin component layer (b2); and

an acrylic block copolymer (C) that contains a methacrylic acid ester polymer block (c1) and an acrylic acid ester polymer block (c2), and

wherein in the melt-extrusion step, shear is applied during discharge from a die at a rate in the range of 200 to 650/s.

Advantageous Effect of the Invention

The methacrylic melt-extrusion-molded article of the present invention has excellent transparency, surface smoothness, bending whitening resistance, pencil hardness, and bendability, and is suitable for use in decoration and use as a building material.

Brief Description of Drawings

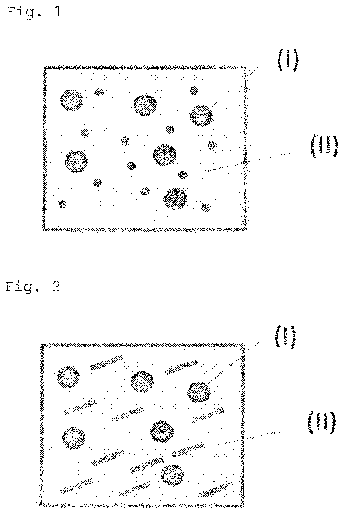

Fig. 1 shows a diagram of a cross-sectional segment of a methacrylic melt-extrusion-molded article according to the present invention obtained in the Examples, the plane of which was parallel to the extrusion direction of the article. The acrylic acid ester polymer block (c2) in the acrylic block copolymer (C) is dispersed in a form of spheres. (I): acrylic multilayered polymer; (II): acrylic block copolymer.

Fig. 2 shows a diagram of a cross-sectional segment of a methacrylic melt-extrusion-molded article according to the present invention obtained in the Examples, the plane of which was parallel to the extrusion direction of the article. The acrylic acid ester polymer block (c2) in the acrylic block copolymer (C) is dispersed in a form of cylinders. (I): acrylic multilayered polymer; (II): acrylic block copolymer.

Description of Embodiments

Methacrylic melt-extrusion-molded article

The methacrylic melt-extrusion-molded article of the present invention comprises:

a methacrylic resin (A) that contains 80 mass% or more of a methyl methacrylate unit and that has a weight average molecular weight of 50,000 or more to 500,000 or less;
an acrylic multilayered polymer (B) that comprises

an outermost layer comprising a thermoplastic resin component and
at least one rubber component layer that is in contact with and covered by the outermost layer; and

an acrylic block copolymer (C) that contains a methacrylic acid ester polymer block (c1) and an acrylic acid ester polymer block (c2),
wherein the molded article has an acetone-insoluble content of 1 to 60 mass%, and
the acrylic acid ester polymer block (c2) is in the form of spheres or cylinders in a cross-section parallel to the extrusion direction of the molded article, the spheres or the cylinders have a short axis diameter of 1 nm or more and 100 nm or less, and the cylinders have a length of 10 nm or more and 500 nm or less.

In one preferred embodiment of the present invention, the molded article of the present invention is such that the methacrylic resin (A) forms a matrix and rubber elastomers including the acrylic multilayered polymer (B) and the acrylic block copolymer (C) are dispersed in the matrix of the methacrylic resin (A).

The methacrylic melt-extrusion-molded article of the present invention preferably has an acetone-insoluble content of 1 to 60 mass%, more preferably 1 to 50 mass%, even more preferably 5 to 45 mass%, particularly preferably 10 to 40 mass%, and most preferably 20 to 40 mass%. The molded article is preferably cut into small pieces and used for the measurement of acetone-insoluble content.

The methacrylic melt-extrusion-molded article of the present invention preferably has an acetone-soluble content of 99 to 40 mass%, more preferably 99 to 50 mass%, even more preferably 95 to 55 mass%, particularly preferably 90 to 60 mass%, and most preferably 80 to 60 mass%.

The acetone-insoluble content can be determined by using 25 mL of acetone per gram of the molded article, stirring for 24 hours at room temperature, centrifuging to separate the precipitate as an acetone-insoluble content, and measuring the mass after drying, and calculating the acetone-insoluble content according to the following formula:

$$\texttt{Acetone-insoluble content (\%) = (Mass of precipitate / Mass before separation) x 100}$$

The methacrylic melt-extrusion-molded article contains a methacrylic resin (A), an acrylic multilayered polymer (B), and an acrylic block copolymer (C) in the following proportions:

- Content of methacrylic resin (A):
  preferably 10 to 89.9 mass%, and more preferably 20 to 79 mass%;
- Content of acrylic multilayered polymer (B):
  preferably 10 to 89.9 mass%, and more preferably 20 to 79 mass%;
- Content of acrylic block copolymer (C):
  preferably 0.1 to 15 mass%, and more preferably 1 to 10 mass%.

Methacrylic resin (A)

The methacrylic resin (A) used in the present invention contains a structural unit derived from methyl methacrylate in an amount of 80 mass% or more, and preferably 90 mass% or more. Further, the methacrylic resin (A) contains a structural unit derived from a monomer other than methyl methacrylate in an amount of 20 mass% or less, and preferably 10 mass% or less.

Examples of the monomer other than methyl methacrylate include acrylic acid esters, such as methyl acrylate, ethyl acrylate, n-propyl acrylate, isopropyl acrylate, n-butyl acrylate, isobutyl acrylate, s-butyl acrylate, t-butyl acrylate, amyl acrylate, isoamyl acrylate, n-hexyl acrylate, 2-ethylhexyl acrylate, pentadecyl acrylate, dodecyl acrylate; phenyl acrylate, benzyl acrylate, phenoxyethyl acrylate, 2-hydroxyethyl acrylate, 2-ethoxyethyl acrylate, glycidyl acrylate, allyl acrylate; cyclohexyl acrylate, norbornenyl acrylate, and isobornyl acrylate; methacrylic acid esters other than methyl methacrylate, such as ethyl methacrylate, n-propyl methacrylate, isopropyl methacrylate, n-butyl methacrylate, isobutyl methacrylate, s-butyl methacrylate, t-butyl methacrylate, amyl methacrylate, isoamyl methacrylate, n-hexyl methacrylate, 2-ethylhexyl methacrylate, pentadecyl methacrylate, dodecyl. methacrylate; phenyl methacrylate, benzyl methacrylate, phenoxyethyl methacrylate, 2-hydroxyethyl methacrylate, 2-ethoxyethyl methacrylate, glycidyl methacrylate, allyl methacrylate; cyclohexyl methacrylate, norbornenyl methacrylate, and isobornyl methacrylate; unsaturated carboxylic acids, such as acrylic acid, methacrylic acid, maleic anhydride, maleic acid, and itaconic acid; olefins, such as ethylene, propylene, 1-butene, isobutene, and 1-octene; conjugated dienes, such as butadiene, isoprene, and myrcene; aromatic vinyl compounds, such as styrene, ($\alpha$-methylstyrene, p-methylstyrene, and m-methylstyrene; and acrylamide, methacrylamide, acrylonitrile, methacrylonitrile, vinyl acetate, vinyl pyridine, vinyl ketone, vinyl chloride, vinylidene chloride, and vinylidene fluoride.

The tacticity of the methacrylic resin (A) is not particularly limited, and for example, resins that have isotactic, heterotactic, or syndiotactic, or like tacticity may be used.

The methacrylic resin (A) preferably has a weight average molecular weight ("Mw (A)") of 50,000 or more and 500,000 or less, and more preferably 60,000 or more and 200,000 or less. When the Mw (A) is too low, the impact resistance and toughness of the obtained molded articles tend to decrease. When the Mw (A) is too large, the moldability tends to decreases because the fluidity of the methacrylic resin composition subjected to melt extrusion decreases.

The ratio of the weight average molecular weight Mw (A) to the number average molecular weight Mn (A) of the methacrylic resin (A), Mw (A)/Mn (A) (the ratio of the weight average molecular weight to the number average molecular weight (weight average molecular weight/number average molecular weight) may be referred to below as the "molecular weight distribution") is preferably 1.03 or more and 2.6 or less, more preferably 1.05 or more and 2.3 or less, and particularly preferably 1.2 or more and 2.0 or less. When the molecular weight distribution is too low, the moldability of the methacrylic resin composition tends to decrease. When the molecular weight distribution is too high, the molded articles tend to be brittle because the impact resistance of molded articles is reduced.

Mw (A) and Mn (A) are values measured by GPC (gel permeation chromatography) and expressed in terms of standard polystyrene.

The molecular weight and molecular weight distribution of the methacrylic resin can be controlled by adjusting the kinds and amounts of the polymerization initiator and chain transfer agent.

The methacrylic resin (A) is obtained by polymerizing a monomer or monomer mixture containing 80 mass% or more of methyl methacrylate.

A commercial product may be used as the methacrylic resin (A). Examples of such commercially available methacrylic resins include PARAPET H1000B (MFR: 22 g/10 min (230°C, 37.3N)), PARAPET GF (MFR: 15 g/10 min (230°C, 37.3N)), PARAPET EH (MFR: 1.3 g/10 min (230°C, 37.3N)), PARAPET HRL (MFR: 2.0 g/10 min (230°C, 37.3N)), and PARAPET G (MFR: 8.0 g/10 min (230°C, 37.3N)) (all trade names, manufactured by Kuraray Co.).

Acrylic multilayered polymer (B)

The acrylic multilayered polymer (B) is a particle having a core-shell structure that contains at least one rubber component layer (b1) inside the polymer (sometimes simply referred to below as "(b1)") and that further comprises at least one thermoplastic resin component layer (b2) (sometimes simply referred to below as "(b2)"), wherein the outermost part of the polymer comprises a thermoplastic resin component layer (b2). The core of the acrylic multilayered polymer (B) is regarded as a layer. The number of layers of the acrylic multilayered polymer (B) may be two or more, and can be three or four or more. Examples of the layer structure include a two-layer structure of (b1)-(b2); a three-layer structure of (b1)-(b1)-(b2), (b1)-(b2)-(b2), or (b2)-(b1)-(b2); and a four-layer structure of (b1)-(b2)-(b1)-(b2); and the like in the order from the center. Among these, a two-layer structure of (b1)-(b2) or a three-layer structure of (b1)-(b1)-(b2) or (b2)-(b1)-(b2) is preferable, and a three-layer structure of (b2)-(b1)-(b2) is more preferable, from the viewpoint of handling.

The mass ratio of the total amount of the rubber component layer (b1) to the total amount of the thermoplastic resin component layer (b2) ((b1)/(b2)) is in the range of 30/70 to 90/10. When the proportion of the layer (b1) is less than the range described above, molded articles may have insufficient impact strength. When the proportion of (b1) is more than the range described above, it is difficult to form a particle structure and melt fluidity is reduced, which makes it difficult to knead the rubber component with other components and mold the resin composition. The mass ratio ((b1)/(b2)) is preferably in the range of 30/70 to 80/20, and more preferably 40/60 to 70/30. When the resin composition of the present invention comprises two or more rubber component layers (b1), the mass ratio is calculated based on the total amount of the rubber component layers. When the resin composition comprises two or more thermoplastic resin component layers (b2), the mass ratio is calculated based on the total amount of the thermoplastic resin component layers.

The layer (b1) preferably contains a copolymer comprising 50 to 98.99 mass% of an acrylic acid ester monomer unit, 44.99 to 10 mass% of at least one additional monofunctional monomer unit, and 0.01 to 10 mass% of a multifunctional monomer unit. The content of the acrylic acid ester monomer unit is more preferably 55 to 89.9 mass%, the content of the additional monofunctional monomer unit is more preferably 44.9 to 10 mass%, and the content of the polyfunctional monomer unit is more preferably 0.1 to 5 mass%.

If the content of the acrylic acid ester monomer is less than 50 mass%, molded articles may have insufficient impact strength due to insufficient rubber elasticity of the acrylic multilayered polymer (B). If the content of the acrylic acid ester monomer is more than 98.99 mass%, it may be difficult to form the particle structure. If the content of the additional monofunctional monomer unit is less than 1 mass%, the multilayered polymer particle may have insufficient optical performance. If the content of the additional monofunctional monomer unit is more than 44.99 mass%, the acrylic multilayered polymer (B) may have insufficient weather resistance. If the content of the multifunctional monomer unit is more than 10 mass%, molded articles may have insufficient impact strength due to insufficient rubber elasticity of the acrylic multilayered polymer (B). If the content of the multifunctional monomer unit is less than 0.01 mass%, it may be difficult to form the particle structure.

The starting monomers of the rubber component layer (b1) are described below.

Examples of acrylic acid esters include esters of acrylic acid and saturated aliphatic alcohols (preferably $C_1$ to $C_{18}$ saturated aliphatic alcohols), such as methyl acrylate (MA), ethyl acrylate, n-propyl acrylate, isopropyl acrylate, n-butyl acrylate (BA), isobutyl acrylate, s-butyl acrylate, t-butyl acrylate, pentyl acrylate, hexyl acrylate, octyl acrylate, 2-ethylhexyl acrylate, dodecyl acrylate, and octadecyl acrylate; esters of acrylic acid and $C_5$ or $C_6$ alicyclic alcohols, such as cyclohexyl acrylate; esters of acrylic acid and phenols, such as phenyl acrylate; esters of acrylic acid and aromatic alcohols, such as benzyl acrylate; and the like. Such acrylic acid esters can be used singly or in a combination of two or more.

Examples of additional monofunctional monomers include methacrylic acid esters including esters of methacrylic acid and saturated aliphatic alcohols (preferably $C_1$ to $C_{22}$ saturated aliphatic alcohols), such as methyl methacrylate (MMA), ethyl methacrylate, n-propyl methacrylate, isopropyl methacrylate, n-butyl methacrylate, isobutyl methacrylate, pentyl methacrylate, hexyl methacrylate, octyl methacrylate, 2-ethylhexyl methacrylate, dodecyl methacrylate, myristyl methacrylate, palmityl methacrylate, stearyl methacrylate, and behenyl methacrylate; esters of methacrylic acid and $C_5$ or $C_6$ alicyclic alcohols, such as cyclohexyl methacrylate; esters of methacrylic acid and phenols, such as phenyl methacrylate; and esters of methacrylic acid and aromatic alcohols, such as benzyl methacrylate; aromatic vinyl monomers such as styrene (St), $\alpha$-methylstyrene, 1-vinylnaphthalene, 3-methylstyrene, 4-propylstyrene, 4-cyclohexylstyrene, 4-dodecylstyrene, 2-ethyl-4-benzylstyrene, 4-(phenylbutyl)styrene, and halogenated styrene; vinyl cyanide monomers such as acrylonitrile and methacrylonitrile; and the like. Among these, styrene is preferred. Such additional monofunctional monomers can be used singly or in a combination of two or more.

Polyfunctional monomers are monomers that have two or more carbon-carbon double bonds in the molecule. Polyfunctional monomers include esters of unsaturated monocarboxylic acids, such as acrylic acid, methacrylic acid, and cinnamic acid, with unsaturated alcohols, such as allyl alcohol and methallyl alcohol; diesters of unsaturated monocarboxylic acids, such as those described above, with glycols, such as ethylene glycol, butanediol and hexanediol; and diesters of dicarboxylic acids, such as phthalic acid, terephthalic acid, isophthalic acid and maleic acid, with unsaturated alcohols, such as those described above. Specific examples include allyl acrylate, methallyl acrylate, allyl methacrylate, methallyl methacrylate, allyl cinnamate, methallyl cinnamate, diallyl maleate, diallyl phthalate, diallyl terephthalate, diallyl isophthalate, divinyl benzene, and ethylene glycol di(meth)acrylate, butanediol di(meth)acrylate, and hexanediol di(meth)acrylate. Among these, allylmethacrylate (ALMA) is preferred. Polyfunctional monomers can be used singly or in a combination of two or more.

The layer (b2) preferably contains a copolymer of 40 to 100 mass% of a methacrylic acid ester monomer unit and 60 to 0 mass% of at least one additional monomer unit. The content of the methacrylic acid ester monomer unit is more preferably 50 to 99 mass%, even more preferably 60 to 99 mass%, and particularly preferably 80 to 99 mass%, and the content of the additional monomer unit is more preferably 50 to 1 mass%, even more preferably 40 to 1 mass%, and still even more preferably 20 to 1 mass%. If the content of the methacrylic acid ester monomer unit is less than 50 mass%, the acrylic multilayered polymer (B) may have insufficient weather resistance.

The starting monomers of the thermoplastic resin component layer (b2) are described below.

Examples of the methacrylic acid ester include methyl methacrylate (MMA), ethyl methacrylate, n-propyl methacrylate, isopropyl methacrylate, n-butyl methacrylate, isobutyl methacrylate, pentyl methacrylate, hexyl methacrylate, octyl methacrylate, 2-ethylhexyl methacrylate, cyclohexyl methacrylate, dodecyl methacrylate, myristyl methacrylate, palmityl methacrylate, stearyl methacrylate, behenyl methacrylate, octadecyl methacrylate, phenyl methacrylate, benzyl methacrylate, and the like. Among these, methyl methacrylate (MMA) is preferred.

Examples of the additional monomer include esters of acrylic acid and saturated aliphatic alcohols (preferably $C_1$ to $C_{18}$ saturated aliphatic alcohols), such as methyl acrylate (MA), ethyl acrylate, n-propyl acrylate, isopropyl acrylate, n-butyl acrylate (BA), isobutyl acrylate, s-butyl acrylate, t-butyl acrylate, pentyl acrylate, hexyl acrylate, octyl acrylate, 2-ethylhexyl acrylate, dodecyl acrylate, and octadecyl acrylate; esters of acrylic acid and $C_5$ or $C_6$ alicyclic alcohols, such as cyclohexyl acrylate; aromatic vinyl monomers such as styrene (St), $\alpha$-methylstyrene, 1-vinylnaphthalene, 3-methylstyrene, 4-propylstyrene, 4-cyclohexylstyrene, 4-dodecylstyrene, 2-ethyl-4-benzylstyrene, 4-(phenylbutyl)styrene, and halogenated styrene; vinyl cyanide monomers such as acrylonitrile and methacrylonitrile; maleimide monomers such as maleimide, N-methylmaleimide, N-ethylmaleimide, N-propylmaleimide, N-isopropylmaleimide, N-cyclohexylmaleimide, N-phenylmaleimide, N-(p-bromophenyl)maleimide, and N-(chlorophenyl)maleimide; polyfunctional monomers given as examples in the description of the layer (b1); and the like. Among these, alkyl esters of acrylic acid such as methyl acrylate (MA), ethyl acrylate, and n-butyl acrylate (BA) are preferred.

In the acrylic multilayered polymer (B), the constituent copolymer of the layer (b2) that constitutes the outermost layer preferably has a weight-average molecular weight (Mw) as measured by GPC of 20,000 to 100,000, more preferably 30,000 to 90,000, and particularly preferably 40,000 to 80,000. If the Mw is less than 20,000, the acrylic multilayered polymer (B) may have insufficient rubber elasticity, and it may be difficult to form the resin composition. If the Mw is more than 100,000, the molded product may have reduced impact strength.

The rubber component layer (b1) of the acrylic multilayered polymer (B) that is the closest to the outermost layer (preferably in contact with the outermost layer) has an average particle size (de) in the range of 0.05 to 0.15 $\mu$m. If the average particle size (de) is less than 0.05 $\mu$m, the stress concentration on the acrylic multilayered polymer (B) is insufficient, and the molded article may have reduced impact strength. If the average particle size (de) is more than 0.15 $\mu$m, voids are formed inside the acrylic multilayered polymer (B), thus resulting in whitening. When the rubber content of the resin composition is constant, the number of particles decreases as the particle size increases beyond a certain level; therefore, the surface-to-surface distance between the particles tends to increase, which increases the probability of cracking in the continuous phase and may reduce the impact strength of the molded article. Voids as referred to herein mean fractures that occur only inside the particles. Since the amount of energy absorbed is very small, it does not contribute very much to the development of impact resistance.

From the viewpoint of stress concentration on the acrylic multilayered polymer (B), the average particle size (de) is preferably 0.05 to 0.15 $\mu$m, and more preferably 0.07 to 0.12 $\mu$m.

The average particle size (de) of the rubber component layer (b1) of the acrylic multilayered polymer (B) can be determined by a method in which a segment of the molded article is measured by electron microscopy or by a method in which a latex is measured by a light scattering method. When the electron microscopy method is used, a segment of the molded article is electronically stained with ruthenium tetroxide, and among the stained rubber component layers (b2) of the acrylic multilayered polymer (B) observed under a transmission electron microscope, the averages of the long axis diameter and the short axis diameter of particles in the rubber component layer (b2) that constitutes the outermost part of the acrylic multilayered polymer (B) is determined. When the light scattering method is used, a latex polymerized up to the rubber component layer during the polymerization of the multilayered polymer particle is sampled, and the average particle size (de) of the rubber component layer can be determined by using an LA-950V2 laser diffraction/scattering particle size distribution analyzer manufactured by Horiba, Ltd.

In one preferred embodiment of the present invention, the method of producing the acrylic multilayered polymer (B) is not particularly limited as long as the method can obtain an acrylic multilayered polymer (B) comprising a rubber component layer (b1) and a thermoplastic resin component layer (b2) as described above. The preferred method for producing the acrylic multilayered polymer (B) having a three-layer structure (the core-intermediate layer-outermost layer) comprises the steps of subjecting a monomer for obtaining a polymer that constitutes the center core to emulsion polymerization to obtain a seed particle (i), subjecting a monomer for obtaining a polymer that constitutes an intermediate layer to emulsion polymerization in the presence of the seed particle (i) to obtain a seed particle (ii), and subjecting a monomer for obtaining a polymer that constitutes the outermost layer to emulsion polymerization in the presence of the seed particle (ii) to obtain a seed particle (iii). The acrylic multilayered polymer(B) having a two-layer structure or a structure of four or more layers can be easily produced by a person skilled in the art with reference to the above description of the method for producing the acrylic multilayered polymer(B) having a three-layer structure. The emulsion polymerization or seed emulsion polymerization method is a technique well known in the art for obtaining general multilayered polymer particles, and a detailed explanation can be obtained by referring to other literature. In the case of the above preferred example, the seed particle (i) is a single layer particle consisting of a thermoplastic resin component layer (b2, the core), the seed particle (ii) is a two-layered particle consisting of a thermoplastic resin component layer (b2, the core) and a rubber component layer (b1, an intermediate layer), and the seed particle (iii) is a three-layered particle consisting of a thermoplastic resin component layer (b2, the core), a rubber component layer (b1, an intermediate layer), and a thermoplastic resin component layer (b2, the outermost layer).

In the polymerization reaction step, the polymerization conditions are adjusted so that the constituent copolymer of the thermoplastic resin component layer (b2) that constitutes at least the outermost part of the acrylic multilayered polymer (B) has an Mw of 20,000 to 100,000. The polymerization conditions are adjusted mainly by the amount of molecular weight modifier, such as alkyl mercaptan. The polymerization conditions of the entire polymerization reaction process are adjusted so that the average particle size up to the outermost thermoplastic resin component layer (b2) of the final acrylic multilayered polymer (B) is in the range of 0.05 to 0.15 $\mu$m.

The average particle size up to the outermost thermoplastic resin component layer (b2) of the acrylic multilayered polymer (B) is determined by sampling the polymerized latex at the time of polymerization of the multilayered polymer particles and measuring the particle size distribution by the light scattering method using an LA-950V2 laser diffraction/scattering particle size distribution analyzer manufactured by Horiba, Ltd.

Acrylic block copolymer (C)

The acrylic block copolymer (C) used in the present invention comprises a methacrylic ester polymer block (c1) and an acrylic ester polymer block (c2). The acrylic block copolymer (C) may have only one or multiple methacrylic acid ester polymer blocks (c1). The acrylic block copolymer (C) may have only one or multiple acrylic ester polymer blocks (c2). The acrylic block copolymer (C) has good compatibility with the methacrylic resin (A) and acrylic multilayered polymer (B).

From the viewpoint of the compatibility, the acrylic block copolymer (C) comprises 10 to 80 mass% of a polymer block (c1) having a methacrylic acid ester monomer unit, and 90 to 20 mass% of a polymer block (c2) mainly comprising an acrylic acid ester monomer unit (based on the total amount of the polymer block (c1) and the polymer block (c2) being defined as 100 mass%). In the acrylic block copolymer (C), the content of the polymer block (c1) is more preferably 20 and 70 mass%, and even more preferably 30 to 60 mass%, and the content of the polymer block (c2) is more preferably 80 to 30 mass%, and even more preferably 70 to 40 mass%.

The number of the polymer block (c1) per molecule may be one or more. When multiple polymer blocks (c1) are present in one molecule, the structural units of the multiple polymer blocks (c1) may be the same or different in formulation and molecular weight. Similarly, the number of the polymer blocks (c2) per molecule may be one or more. When multiple polymer blocks (c2) are present in one molecule, the structural units of the multiple polymer blocks (c2) may be the same or different in formulation and molecular weight.

The polymer block (c1) mainly contains a methacrylic acid ester monomer unit. The content of the methacrylic acid ester monomer unit in the polymer block (c1) is preferably 80 mass% or more, more preferably 90 mass% or more, particularly preferably 95 mass% or more, and most preferably 98 mass% or more, and the polymer block (c1) may consist only of a methacrylic acid ester monomer unit.

The starting monomers of the methacrylic polymer block (c1) are described below.

Examples of methacrylic acid esters include methyl methacrylate (MMA), ethyl methacrylate, n-propyl methacrylate, isopropyl methacrylate, n-butyl methacrylate, isobutyl methacrylate, s-butyl methacrylate, t-butyl methacrylate, amyl methacrylate, isoamyl methacrylate, n-hexyl methacrylate, cyclohexyl methacrylate, 2-ethylhexyl methacrylate, pentadecyl methacrylate, dodecyl methacrylate, isobornyl methacrylate, phenyl methacrylate, benzyl methacrylate, phenoxyethyl methacrylate, 2-hydroxyethyl methacrylate, 2-methoxyethyl methacrylate, glycidyl methacrylate, allyl methacrylate (ALMA), and the like. Among these, methyl methacrylate (MMA), ethyl methacrylate, isopropyl methacrylate, n-butyl methacrylate, t-butyl methacrylate, cyclohexyl methacrylate, isobornyl methacrylate, and the like are preferred, and methyl methacrylate (MMA) is particularly preferred from the viewpoint of improvement in transparency and heat resistance. The methacrylic acid esters can be used singly or in a combination of two or more.

The weight-average molecular weight of the methacrylic polymer block (c1) (referred to as "Mw (c1)") is such that the lower limit is preferably 5,000, more preferably 8,000, even more preferably 12,000, particularly preferably 15,000, and most preferably 20,000; and the upper limit is preferably 150,000, more preferably 120,000, and particularly preferably 100,000. When the acrylic block copolymer (C) comprises multiple polymer blocks (c1), the weight-average molecular weight (Mw (c1)) is the total Mw of the polymer blocks (c1).

In one preferred embodiment of the present invention, the weight-average molecular weight of the methacrylic polymer block (c1) of the acrylic block copolymer (C) (referred to as "Mw (c1)") and the weight average molecular weight of the methacrylic resin (A) (referred to as "Mw (A)") satisfy the following formula (Y) .

$$0.5 \leq Mw\ (A)/Mw\ (c1) \leq 2.5 \qquad (Y)$$

The ratio of the weight average molecular weight Mw (A) of the methacrylic resin (A) to Mw (c1), i.e., Mw (A)/Mw (c1) is 0.5 or more and 2.5 or less, preferably 0.6 and more and 2.3 or less, more preferably 0.7 or more and 2.2 or less. If the Mw (A)/Mw (c1) ratio is out of the above range, the acrylic block copolymer (C) dispersed in the methacrylic resin (A) has a large particle size and whitening occurs when stress is applied. On the other hand, if the Mw (A)/Mw (c1) ratio is within the above range, the block copolymer (C) dispersed in the methacrylic resin (A) has a small particle size, thus providing excellent stress whitening transparency.

The content of the methacrylic polymer block (c1) in the acrylic block copolymer (C) is preferably 10 to 80 mass%, and more preferably 20 to 70 mass%, from the standpoint of transparency, flexibility, plasticity, bending resistance, impact resistance, moldability, and surface smoothness of the molded article of the thermoplastic resin composition of the present invention. When the acrylic block copolymer (C) has multiple polymer blocks (c1), the polymer block (c1) content is the total content of the polymer blocks (c1).

In one preferred embodiment of the present invention, the acrylic polymer block (c2) mainly contains an acrylic acid ester monomer unit. The content of the acrylic acid ester monomer unit in the acrylic polymer block (c2) is preferably 45 mass% or more, more preferably 50 mass% or more, even more preferably 60 mass% or more, and particularly preferably 90 mass% or more.

The starting monomer of the acrylic polymer block (c2) is described below.

Examples of acrylic acid esters include methyl acrylate, ethyl acrylate, n-propyl acrylate, isopropyl acrylate, n-butyl acrylate (BA), isobutyl acrylate, s-butyl acrylate, t-butyl acrylate, amyl acrylate, isoamyl acrylate, n-hexyl acrylate, cyclohexyl acrylate, 2-ethylhexyl acrylate, pentadecyl acrylate, dodecyl acrylate, isobornyl acrylate, phenyl acrylate, benzyl acrylate, phenoxyethyl acrylate, 2-hydroxyethyl acrylate, 2-methoxyethyl acrylate, glycidyl acrylate, allyl acrylate, and the like. Acrylic acid esters can be used singly or in a combination of two or more.

In another preferred embodiment of the present invention, from the viewpoint of transparency, the acrylic polymer block (c2) is preferably a polymer block (c2-p) comprising an acrylic acid alkyl ester monomer unit and a (meth)acrylic acid aromatic hydrocarbon ester monomer unit. The content of the acrylic acid alkyl ester monomer unit in the polymer block (c2) is preferably 50 to 90 mass%, and more preferably 60 to 80 mass%; and the content of the (meth)acrylic acid aromatic hydrocarbon ester monomer unit in the polymer block (c2) is preferably 50 to 10 mass%, and more preferably 40 to 20 mass%.

In one preferred embodiment of the present invention, the weight average molecular weight of the acrylic polymer block (c2) (referred to as "Mw (c2)") satisfies the following formula (Z), and more preferably the following formula (Z1).

$$5,000 \leq Mw\ (c2) \leq 120,000 \qquad (Z)$$

$$40,000 \leq Mw\ (c2) \leq 120,000 \qquad (Z1)$$

The weight-average molecular weight of the acrylic polymer block (c2), i.e., Mw (c2), is preferably such that the lower limit of the weight-average molecular weight Mw (c2) is preferably 5,000, more preferably 15,000, even more preferably 20,000, particularly preferably 30,000, and most preferably 40,000, and the upper limit of the weight-average molecular weight Mw (c2) is preferably 120,000, more preferably 110,000, and particularly preferably 100,000. If the Mw (c2) is too small, the obtained molded article may have reduced impact resistance. On the other hand, if the Mw (c2) is too large, the obtained molded article may have reduced surface smoothness. When the acrylic block copolymer (C) comprises multiple polymer blocks (c2), the weight average molecular weight Mw (c2) is the total Mw of the polymer blocks (c2).

The content of the acrylic polymer block (c2) in the acrylic block copolymer (C) is preferably 10 to 90 mass%, and more preferably 20 mass% to 80 mass%, from the viewpoint of transparency, flexibility, plasticity, flex resistance, impact resistance, moldability, and surface smoothness of molded articles. When the acrylic block copolymer (C) comprises multiple polymer blocks (c2), the polymer block (c2) content is the total content of the polymer blocks (c2).

The dispersed phase of the acrylic polymer block (b2) in the methacrylic resin (A) is preferably spherical or cylindrical in a cross-section parallel to the extrusion direction of the melt-extrusion-molded article. When the dispersed phase is lamellar, the extrusion-molded article becomes cloudy and whitening occurs when stress is applied.

The dispersed phase of the acrylic polymer block (b2) preferably has the following particle size. When the dispersed phase is spherical, spheres have a diameter of 1 nm or more and 200 nm or less, and preferably 10 nm or more and 100 nm or less. If the diameter is less than 1 nm, the concentration of stress applied around the acrylic polymer block is small and the bending resistance is not exhibited. If the diameter is more than 200 nm, whitening occurs when stress is applied.

When the dispersed phase is cylindrical, cylinders have a short axis diameter of 1 nm or more and 200 nm or less, and a length of preferably 1 nm or more and 500 nm or less, and more preferably 10 nm or more and 400 nm or less. If the length is less than 10 nm, the concentration of stress applied around the acrylic polymer block is small and bending resistance does not occur. If the length is more than 500 nm, whitening occurs when stress is applied.

The bonding form of the methacrylic polymer block (c1) and the acrylic polymer block (c2) in the acrylic block copolymer (C) is not particularly limited. Examples of the acrylic block copolymer (C) include linear block copolymers such as a diblock copolymer having a (c1)-(c2) structure in which one end of the polymer block (c1) is connected to one end of the polymer block (c2); a triblock copolymer having a (c2)-(c1)-(c2) structure in which both ends of the polymer block (c1) are connected to one end of each polymer block (c2); and a triblock copolymer having a (c1)-(c2)-(c1) structure in which both ends of the polymer block (c2) are connected to one end of each polymer block (c1).

Among them, diblock copolymers and triblock copolymers are preferred, and a diblock copolymer having a (c1)-(c2) structure and a triblock copolymer having a (c1)-(c2)-(c1) structure are more preferred.

The acrylic block copolymer (C) may, if necessary, have functional groups, such as hydroxyl groups, carboxyl groups, acid anhydride groups, and amino groups, in the molecular chain and/or at ends of the molecular chain.

The weight-average molecular weight (referred to as "Mw (C)") of the acrylic block copolymer (C) is 32,000 to 300,000, preferably 40,000 to 250,000, more preferably 45,000 to 230,000, and particularly preferably 50,000 to 200,000. When Mw (C) falls within the range described above, unmelted matter at the time of melt kneading of starting materials in the production of the resin composition, which is responsible for defect formation in a molded article, can be reduced to a very small amount.

The acrylic block copolymer (C) preferably has a ratio of the weight-average molecular weight (Mw (C)) to the number-average molecular weight (Mn (C)) (referred to as "Mw (C)/Mn (C)") in the range of 1.0 to 2.0, and more preferably 1.0 to 1.6. When the Mw (C)/Mn (C) ratio falls within the range described above, unmelted matter at the time of melt kneading of starting materials in the production of the resin composition, which is responsible for defect formation in molded articles, can be reduced to a very small amount.

The method for producing the acrylic block copolymer (C) is not particularly limited and a method comprising subjecting each polymer block to living polymerization is generally used. Examples of the living polymerization method include a method comprising performing anionic polymerization in the presence of a mineral acid salt, such as an alkali metal or alkaline earth metal salt using an organic alkali metal compound as a polymerization initiator, a method comprising performing anionic polymerization in the presence of an organoaluminum compound using an organic alkali metal compound as a polymerization initiator, a method comprising performing polymerization using an organic rare earth metal complex as a polymerization initiator, and a method comprising performing radical polymerization in the presence of a copper compound using an $\alpha$-halogenated ester compound as a polymerization initiator. Other examples include a method comprising performing polymerization using a polyvalent radical polymerization initiator or a polyvalent radical chain transfer agent. Among these, a method comprising performing anionic polymerization in the presence of an organoaluminum compound using an organic alkali metal compound as a polymerization initiator is particularly preferred because the method can produce the acrylic block copolymer (C) with high purity and easily controls the formulation and molecular weight of each block, and is economical.

The refractive index of the acrylic block copolymer (C) is not particularly limited and is preferably 1.485 to 1.495, and more preferably 1.487 to 1.493. When the refractive index falls within the range described above, the transparency is high. In the present specification, "refractive index" means a value measured at a wavelength of 587.6 nm (D-line).

Methacrylic resin composition

In the step of mixing the methacrylic resin (A) and the acrylic block copolymer (C), the acrylic multilayered polymer (B) of the present invention is added and kneaded to thereby obtain a methacrylic resin composition for producing a methacylic melt-extrusion-molded article that has excellent transparency, surface smoothness, bending whitening resistance, pencil hardness, and bendability.

The methacrylic resin (A), the acrylic multilayered polymer (B), and the acrylic block copolymer (C) can be mixed by the following four methods, any of which may be selected:

(i) a two-step mixing step in which the methacrylic resin (A) and the acrylic multilayered polymer (B) are first mixed, and then the acrylic block copolymer (C) is mixed with the mixture of (A) and (a);

(ii) a two-step mixing method in which the acrylic methacrylic resin (A) and the acrylic block copolymer (C) are first mixed, and then the acrylic multilayered polymer (B) is mixed with the mixture of (A) and (b);

(iii) a two-step mixing method in which the acrylic multilayered polymer (B) and the acrylic block copolymer (C) are first mixed, and then the methacrylic resin (A) is mixed into the mixture of (a) + (b) ; and

(iv) a one-step mixing method in which the methacrylic resin (A), the acrylic multilayered polymer (B), and the acrylic block copolymer (C) are mixed in one step.

The kneading can be performed by a known method, such as a method of kneading using a batch kneader such as a Banbury mixer, a pressure kneader, or a Brabender plastograph, or a continuous kneader such as a single-screw extruder, a twin-screw extruder, or a multi-screw extruder. Alternatively, a method in which after a high-concentration master pellet has been produced by the above method, the pellet is diluted and the diluted product is melt-kneaded can also be used. From the viewpoint of productivity, the single-screw method or the biaxial-screw method is preferable. In particular, single-screw extruders are preferred because of their low shear energy given to the resin composition.

Rubber content

In the present invention, the total rubber content of the rubber component layer (b1) of the acrylic multilayered polymer (B) and the acrylic polymer block (c2) of the acrylic block copolymer (C) is in the range of 5 to 60 mass%, preferably 6 to 50 mass%, and more preferably 7 to 30 mass%. If the total rubber content of the rubber component layer (b1) and acrylic polymer block (c2) is less than 5 mass%, the impact strength deteriorates. If the total rubber content of the rubber component layer (b1) and acrylic polymer block (c2) is more than 60 mass%, the stiffness deteriorates.

C2 rubber ratio

In the present invention, the ratio of the content of the acrylic polymer block (c2) to the total rubber content of (b1) and (c2) is in the range of 5 to 90 mass%, preferably in the range of 10 to 85 mass%, and more preferably in the range of 15 to 80 mass%. When the ratio of the content of the acrylic polymer block (c2) to the rubber content is in the range of 5 to 90 mass%, the multilayered polymer particle and the block copolymer produce a synergistic effect to achieve excellent impact strength.

Optional components

The thermoplastic resin composition of the present invention may contain other polymers as required, in addition to the methacrylic resin (A), acrylic multilayered polymer (B), and acrylic block copolymer (C), as long as the effect of the present invention is not impaired. Examples of such other polymers include olefin resins such as polyethylene, polypropylene, polybutene-1, poly-4-methylpentene-1, and polynorbornene; ethylene ionomers; styrene resins such as polystyrene, styrenemaleic anhydride copolymers, high-impact polystyrene, AS resin, ABS resin, AES resin, AAS resin, ACS resin, and MBS resin; methyl methacrylate-styrene copolymers;
ester resins such as polyethylene terephthalate and polybutylene terephthalate; amide resins such as nylon 6, nylon 66, and polyamide elastomers; other thermoplastic resins such as polyphenylene sulfide, polyether ether ketone, polysulfone, polyphenylene oxide, polyimide, polyetherimide, polycarbonate, polyvinyl chloride, polyvinylidene chloride, polyvinylidene fluoride, polyvinyl alcohol, ethylene-vinyl alcohol copolymers, polyacetal, and phenoxy resins; thermosetting resins such as phenolic resins, melamine resins, silicone resins, and epoxy resins; polyurethane; modified polyphenylene ether; silicone-modified resins; acrylic rubber and silicone rubber; styrene thermoplastic elastomers such as SEPS, SEBS, and SIS; and olefin rubbers such as IR, EPR, and EPDM. Such additional polymers can be used singly or in a combination of two or more.

The methacrylic melt-extrusion-molded article of the present invention may contain various additives, if necessary. Examples of the additives include antioxidants, thermal degradation inhibitors, ultraviolet absorbers, light stabilizers, lubricants, mold release agents, polymer processing aids, antistatic agents, flame retardants, dyes or pigments, delusterants, agglutination inhibitors, impact resistance modifiers, phosphors, and the like. The contents of such additives can be appropriately set without impairing the advantageous effects of the present invention. For example, preferably, the antioxidant content is 0.01 to 1 part by mass, the ultraviolet absorber content is 0.01 to 3 parts by mass, the light stabilizer content is 0.01 to 3 parts by mass, the lubricant content is 0.01 to 3 parts by mass, the delusterant content is 0.1 to 20 parts by mass, and the agglutination inhibitor content is 0.001 to 1 parts by mass, with respect to 100 parts by mass of the thermoplastic resin composition subjected to melt extrusion molding. Other additives can also be added in an amount of 0.01 to 3 parts by mass.

Antioxidants in themselves are effective for preventing the oxidation degradation of resins in the presence of oxygen. Examples of antioxidants include phosphorus-based antioxidants, phenolic antioxidants, sulfur-based antioxidants, amine-based antioxidants, and the like. Among these, phosphorus-based antioxidants and phenolic antioxidants are preferred, and use of a phenolic antioxidant alone or combined use of a phosphorus-based antioxidant and a phenolic antioxidant is more preferred, from the viewpoint of an effect of preventing degradation of optical characteristics due to staining. When a phosphorus-based antioxidant and a phenolic antioxidant are used in combination, the molar ratio of the phosphorus-based antioxidant/phenolic antioxidant is preferably in the range of 0.2/1 to 2/1, and more preferably 0.5/1 to 1/1.

Preferred examples of phosphorus-based antioxidants include 2,2-methylenebis(4,6-di-t-butylphenyl)octyl phosphite (ADK STAB HP-10 manufactured by Adeka Corporation), tris(2,4-dit-butylphenyl)phosphite (IRGAFOS 168 manufactured by BASF Japan Ltd.), 3,9-bis(2,6-di-t-butyl-4-methylphenoxy)-2,4,8,10-tetraoxa-3,9-diphosphaspiro[5.5]undecane (ADK STAB PEP-36 manufactured by Adeka Corporation), and the like.

Preferred examples of phenolic antioxidants include pentaerythrityl-tetrakis[3-(3,5-di-t-butyl-4-hydroxyphenyl)propionate] (IRGANOX 1010 manufactured by BASF Japan Ltd.) and octadecyl-3-(3,5-di-t-butyl-4-hydroxyphenyl)propionate (IRGANOX 1076 manufactured by BASF Japan Ltd.).

Preferred examples of sulfur antioxidants include dilauryl 3,3'-thiodipropionate, distearyl 3,3'-thiodipropionate, pentaerythritol tetrakis(3-laurylthiopropionate), and the like.

Preferable examples of amine antioxidants include octylated diphenylamine and the like.

Thermal degradation inhibitors are compounds that prevent thermal degradation of a resin by scavenging polymer radicals generated upon exposure to a high temperature under substantially oxygen-free conditions. Preferred examples of thermal degradation inhibitors include 2-t-butyl-6-(3'-t-butyl-5'-methyl-hydroxybenzyl)-4-methylphenylacrylate (Sumilizer GM manufactured by Sumitomo Chemical Co., Ltd.) and 2,4-di-t-amyl-6-(3',5'-di-t-amyl-2'-hydroxy-a-methylbenzyl)phenylacrylate (Sumilizer GS manufactured by Sumitomo Chemical Co., Ltd.).

Ultraviolet absorbers are compounds considered to have ability to absorb ultraviolet rays and have the function of mainly converting light energy to heat energy. Examples of ultraviolet absorbers include benzophenones, benzotriazoles, triazines, benzoates, salicylates, cyano acrylates, oxalic anilides, malonic acid esters, formamidines, and the like. Among these, benzotriazoles and triazines are preferred. Such ultraviolet absorbers can be used singly or in a combination of two or more.

Benzotriazoles are highly effective for inhibiting reduction of optical characteristics, such as staining, due to ultraviolet irradiation and are therefore suitable when the thermoplastic resin composition is used for optical purposes. Preferred examples of benzotriazoles include 4-methyl-2-(2H-benzotriazol-2-yl)phenol (trade name JF-77, manufactured by Johoku Chemical Co., Ltd.), 2-(2H-benzotriazol-2-yl)-4-(1,1,3,3-tetramethylbutyl)phenol (trade name TINUVIN 329, manufactured by BASF Japan Ltd.), 2-(2H-benzotriazol-2-yl)-4,6-bis(1-methyl-1-phenylethyl)phenol (trade name TINUVIN 234, manufactured by BASF Japan Ltd.), 2,2'-methylenebis[6-(2H-benzotriazol-2-yl)-4-t-octylphenol] (ADK STAB LA-31, manufactured by ADEKA Corp.), and the like.

Triazine ultraviolet absorbers are preferably used when efficient absorption of a wavelength around 380 nm is desired. Examples of such ultraviolet absorbers include 2,4,6-tris(2-hydroxy-4-hexyloxy-3-methylphenyl)-1,3,5-triazine (ADK STAB LA-F70, manufactured by ADEKA Corp.), and its analog hydroxyphenyltriazine-based ultraviolet absorbers (TINUVIN 477 and TINUVIN 460, manufactured by BASF Japan Ltd.); and the like.

Light stabilizers are compounds considered to have the function of mainly scavenging radicals generated by oxidation due to light. Preferred examples of light stabilizers include hindered amines such as compounds having a 2,2,6,6-tetraalkylpiperidine backbone. Examples include bis(2,2,6,6-tetramethyl-4-piperidyl)sebacate (ADK STAB LA-77Y, manufactured by ADEKA Corp.).

Lubricants are compounds considered to be effective for improving properties such as mold release and processability by adjusting the lubricity between a resin and a metal surface and preventing adhesion or sticking. Examples of lubricants include higher alcohols, hydrocarbons, fatty acids, fatty acid metal salts, aliphatic amides, fatty acid esters, and the like. Among these, aliphatic monohydric alcohols having 12 to 18 carbon atoms and aliphatic amides are preferred, and aliphatic amides are more preferred, from the viewpoint of compatibility with the methacrylic resin composition of the present invention. The aliphatic amides are classified into saturated aliphatic amides and unsaturated aliphatic amides. Unsaturated aliphatic amides are more preferred because a slipping effect based on the prevention of sticking is expected. Examples of unsaturated aliphatic amides include N,N'-ethylenebisoleic acid amide (SLIPAX O, manufactured by Nippon Kasei Co., Ltd.) and N,N'-dioleyladipic acid amide (SLIPAX ZOA, manufactured by Nippon Kasei Co., Ltd.).

Examples of release agents include higher alcohols, such as cetyl alcohol and stearyl alcohol; glycerin higher fatty acid esters, such as stearic acid monoglyceride and stearic acid diglyceride; and the like. In the present invention, it is preferable to use a higher alcohol and a glycerin fatty acid monoester in combination as a release agent. When a higher alcohol and a glycerin fatty acid monoester are used in combination, the mass ratio of the higher alcohol to the glycerin fatty acid monoester is preferably in the range of 2.5:1 to 3.5:1, and more preferably 2.8:1 to 3.2:1.

Polymer processing aids are compounds that are effective in achieving thickness accuracy and thinness of the obtained film when a methacrylic resin composition is molded. Polymer processing aids are polymer particles that can be usually produced by emulsion polymerization and that have a particle size of 0.05 to 0.5 $\mu$m.

Examples of antistatic agents include alkyl sulfonates such as sodium heptyl sulfonate, sodium octyl sulfonate, sodium nonyl sulfonate, sodium decyl sulfonate, sodium dodecyl sulfonate, sodium cetyl sulfonate, sodium octadecyl sulfonate, sodium diheptyl sulfonate, potassium heptyl sulfonate, potassium octyl sulfonate, potassium nonyl sulfonate, potassium decyl sulfonate, potassium dodecyl sulfonate, potassium cetyl sulfonate, potassium octadecyl sulfonate, potassium diheptyl sulfonate, lithium heptyl sulfonate, lithium octyl sulfonate, lithium nonyl sulfonate, lithium decyl sulfonate, lithium dodecyl sulfonate, lithium cetyl sulfonate, lithium octadecyl sulfonate, and lithium diheptyl sulfonate; and the like.

Examples of flame retardants include metal hydrates having hydroxyl groups or crystalline water, such as magnesium hydroxide, aluminium hydroxide, aluminium hydrated silicate, magnesium hydrated silicate, and hydrotalcite; phosphoric acid compounds, such as polyphosphoric amine and phosphoric acid esters; silicon compounds; and the like. Phosphoric acid ester flame retardants, such as trimethyl phosphate, triethyl phosphate, tripropyl phosphate, tributyl phosphate, tripentyl phosphate, trihexyl phosphate, tricyclohexyl phosphate, triphenyl phosphate, tricresyl phosphate, trixilenyl phosphate, dimethyl ethyl phosphate, methyl dibutyl phosphate, ethyl dipropyl phosphate, and hydroxyphenyl diphenyl phosphate are preferred.

Examples of dyes and pigments include red organic pigments, such as Para Red, Fire Red, pyrazolone red, thioindico red, and perylene red; blue organic pigments, such as cyanine blue and indanthrene blue; and green organic pigments, such as cyanine green and naphthol green. These pigments can be used singly or in a combination with two or more.

Examples of delusterants include glass microparticles, polysiloxane-based crosslinked microparticles, crosslinked-polymer microparticles, mica, talc, calcium carbonate, barium sulfate, and the like.

Examples of agglutination inhibitors include fatty acids, such as stearic acid and palmitic acid; fatty acid metal salts, such as calcium stearate, zinc stearate, magnesium stearate, potassium palmitate, and sodium palmitate; waxes, such as polyethylene wax, polypropylene wax, and montanic acid wax; low-molecular-weight polyolefins, such as low molecular weight polyethylene and low molecular weight polypropylene; acrylic resin powder; polyorganosiloxane, such as dimethylpolysiloxane; amide resin powders, such as octadecylamine, alkyl phosphate, fatty acid esters, and ethylene bis-stearylamide; fluororesin powders such as ethylene tetrafluoride resins; and molybdenum disulfide powder, silicone resin powder, silicone rubber powder, silica, and the like.

Examples of impact modifiers include core-shell modifiers containing diene rubber as a core layer component; modifiers containing multiple rubber particles; and the like.

Examples of phosphors include fluorescent pigments, fluorescent dyes, fluorescent white dyes, fluorescent whitening agents, fluorescent bleaching agents, and the like.

When the methacrylic resin composition contains one or more additional polymers and/or additives, these components may be added during polymerization of the methacrylic resin (A) and/or the acrylic multilayered polymer (B) and/or the acrylic block copolymer (C), or may be added during or after mixing of the methacrylic resin particle (A) and/or the acrylic multilayered polymer (B) and/or the acrylic block copolymer (C).

The molded article of the present invention is formed by the melt extrusion method to control the dispersed phase of the acrylic block polymer (C). The molded article is also useful as a film and can be well processed by a usual melt extrusion method, such as inflation, T-die extrusion, or calendering, or by solution casting etc. If necessary, a film with excellent surface properties can also be obtained by simultaneously bringing both sides of the film into contact with a roll or a metal belt, in particular, by simultaneously bringing both sides of the film into contact with a roll or a metal belt heated to the glass transition temperature or higher. It is also possible to modify the film in accordance with the purpose by subjecting the film to laminate molding or biaxial stretching. Of these, the T-die extrusion method is particularly preferred. The thickness of the film is preferably 20 to 200 $\mu$m, and more preferably 30 to 100 $\mu$m.

To disperse the acrylic block polymer in the form of cylinders, the ratio of the die lip opening (Dr) to the thickness of the molded product (Dt) in the T-die extrusion method, i.e., Dr/Dt, should be in the range of $1 \leq Dr/Dt \leq 20$, and more preferably in the range of $3 \leq Dr/Dt \leq 10$. If Dr/Dt is less than 1, the acrylic block polymer forms spheres that have a large dispersed particle size, and whitening occurs when stress is applied. On the other hand, if Dr/Dt exceeds 20, the acrylic block polymer forms cylinders with a large length, and when stress is applied, whitening occurs and the anisotropy becomes large.

When the acrylic block polymer is produced using a T-die, shear is preferably applied during discharge from the die at a rate in the range of 200 to 650/s, and more preferably 300 to 550/s. If the shear rate is less than 200/s, the shear applied to the block copolymer is small, which results in a large dispersed particle and causes whitening. On the other hand, if the shear rate exceeds 650/s, strong shear is applied to the block copolymer and a dispersed particle size of 1 nm or less is obtained, and the obtained molded product does not show bendability.

The methalic melt-extrusion molded article of the present invention, in particular, film, can be used by laminating the film onto metal or plastic. Examples of lamination methods include wet lamination in which after an adhesive is applied to a metal plate, such as a steel plate, the film is placed on the metal plate and dried so as to bond the film and the metal plate together, or dry lamination, extrusion lamination, hot melt lamination, and the like.

Examples of methods for laminating the film onto a plastic part include film insert molding or laminate injection press molding in which the film is placed in a mold and then a resin is injected into the mold; film in-mold molding in which a film previously molded is placed in a mold and then a resin is injected into the mold; and the like.

A functional layer or a thermoplastic film can be further formed on the methacrylic melt-extruded film of the present invention to form a laminated film.

When the molded article of the present invention is a methacrylic melt-extruded film, a functional layer can be formed on the methacrylic melt-extruded film to form a laminated film. The functional layer can be formed on one or both sides of the film. Functional layers include hard coating layers, anti-glare layers, anti-reflection layers, anti-static layers, and the like. The laminated film may contain at least one of these layers.

When the methacrylic melt-extruded film, which is a molded article of the present invention, is a laminated film comprising a functional layer and a film, the functional layer preferably has a thickness of 0.1 to 20 $\mu$m, more preferably 1 to 10 $\mu$m, and the laminated film preferably has a thickness of 20 to 220 $\mu$m, and more preferably 30 to 110 $\mu$m.

When the molded article of the present invention is a methacrylic melt-extruded film, a thermoplastic resin film can be formed on the methacrylic melt-extruded film to form a laminated film. The thermoplastic resin film can be formed on one or both sides of the methacrylic melt-extruded film. Examples of the thermoplastic resin of the thermoplastic resin film include various thermoplastic resins, such as polyolefin (e.g., polyethylene, polypropylene, and polymethylpentene), polystyrene, polycarbonate, polyvinyl chloride, methacrylic resin, nylon, and polyethylene terephthalate, and copolymers comprising multiple monomer units that constitute such thermoplastic resins. The thermoplastic resin film may contain only one thermoplastic resin or a combination of two or more kinds of thermoplastic resins.

When the molded article is a laminated film comprising the methacrylic melt-extruded film of the present invention and a thermoplastic resin film, the thermoplastic resin film preferably has a thickness of 20 to 200 $\mu$m, and preferably 30 to 100 $\mu$m; and the thermoplastic resin film preferably has a thickness of 5 to 100 $\mu$m, and more preferably 10 to 15 $\mu$m.

The methacrylic melt-extrusion-molded article of the present invention can be used as parts for various applications. Specific examples of the applications of the methacrylic melt-extrusion-molded article of the present invention include sign parts such as advertising pillars, stand signs, side signs, transom signs, and roof signs; marking films; display parts such as showcases, partition panels, and store displays; illumination parts such as fluorescent lamp covers, mood lighting covers, lamp shades, luminous ceilings, luminous walls, and chandeliers; interior parts such as furniture, pendants, and mirrors; architectural parts such as doors, domes, safety window glass, partitions, stair baseboards, balcony baseboards, and leisure building roofs; transportation-related parts such as airplane windshields, pilot visors, motorcycle and motorboat windshields, bus sun visors, automobile side visors, rear visors, head wings, headlight covers, sunroofs, glazing, interior automobile parts, and exterior automobile parts such as bumpers; electronic equipment parts such as faceplates for audiovisual equipment, stereo covers, television protective masks, and vending machine display covers; medical equipment parts such as incubators and X-ray parts; instrument-related parts such as machine covers, instrument covers, experiment devices, rulers, dials, and observation windows; optics-related parts such as liquid crystal protection plates, light guide plates, light guide films, Fresnel lenses, lenticular lenses, front panels of various displays, and diffusion plates; traffic parts such as road signs, direction boards, mirrors on curved roads, and sound-insulating walls; in addition, greenhouses, large water tanks, box water tanks, bathroom parts, clock panels, bathtubs, sanitary articles, desk mats, parts of recreational devices, toys, face protection masks for welding, solar cell back sheets, and flexible-solar-cell back sheets; surface materials for use in computers, cellular phones, furniture, vending machines, bathroom parts, etc.; and the like.

On the other hand, examples of the applications of the methacrylic melt-extrusion-molded article of the present invention, in particular, in the form of a film laminate thereof include interior or exterior materials for automobiles, daily goods, wallpaper, painting alternatives, housings for furniture and electric devices, housings for office equipment such as fax machines, floor materials, parts of electric or electronic devices, bathroom equipment, and the like.

As explained above, the methacrylic melt-extrusion-molded article of the present invention contains a methacrylic resin (A), an acrylic multilayered polymer (B), and an acrylic block copolymer (C). Since the acrylic block copolymer is controlled to form a specific dispersed phase, a methacrylic molded article and film that have excellent transparency, surface smoothness, bending whitening resistance, pencil hardness, and bendability, and that are suitable for use in decoration and for use as a building material, can be provided.

Examples

The following describes the effect of the present invention with reference to Examples and Comparative Examples. The present invention is not limited to the following Examples in any way. Below, "part" indicates "parts by mass," and "%" indicates "mass%" unless otherwise specified.

Methacrylic melt-extrusion-molded articles in a film form were evaluated by the following method.

Observation of Morphology

Cross-sectional segments with a thickness of 50 nm, the plane of which was parallel to the extrusion direction, were prepared with a ultramicrotome (Leica EM UC7rt, JEOL Ltd.) from films (thickness: 75 $\mu$m) prepared in the Examples and Comparative Examples, described later. The prepared segments were stained with a 10% aqueous solution of phosphotungstic acid, and the shape of the stained portion (the average particle size (de) of a rubber component layer (b1) in an acrylic multilayered polymer (B) and the morphology of an acrylic polymer block (c2) in an acrylic block copolymer (C)) was observed with a STEM (main part: JSM-7600F; detector: SM-74240RTED, JEOL Ltd.).

Dispersion in a Spherical Form

When an acrylic block copolymer is dispersed spherically (in a form of spheres), a block copolymer and an acrylic multilayered polymer are observed as two different types of stained spherical portions with different particle sizes. The average particle size of 30 particles in stained portions was measured for each type of the stained spherical portions, and the component having a smaller average particle size was determined to be the diameter of the block copolymer (Fig. 1).

Dispersion in a Cylindrical Form

When an acrylic block copolymer was cylindrically dispersed (in a form of cylinders), the cylindrically dispersed stained portion was determined to be a block copolymer, and the length and the short axis diameter of 30 particles in stained portions were measured. The average was determined to be their length and the short axis diameter (Fig. 2).

Acetone-insoluble Matter

2 g (mass before separation) of a prepared film (thickness: 75 $\mu$m) was added to 50 mL of acetone, and the mixture was stirred at room temperature for 24 hours. The entire amount of the obtained liquid was centrifuged with a centrifugal machine (Hitachi Koki Co., Ltd.; CR20GIII) at a rotation speed of 20000 rpm and at a temperature of 0°C for 180 minutes. The supernatant and the precipitate were separated, and each was individually dried in a vacuum at 50°C for 8 hours to obtain acetone-soluble matter and acetone-insoluble matter. The mass of the obtained precipitate was measured, and the ratio of the acetone-insoluble matter was determined according to the following formula.

$$\text{Acetone-insoluble Matter (\%)} = [(\text{Mass of Precipitate})/(\text{Mass before Separation})] \times 100$$

Haze

A resin film (thickness: 75 $\mu$m) was cut to 50 mm $\times$ 50 mm to prepare a test specimen. The haze was measured at 23°C in accordance with JIS K7105 and evaluated according to the following criteria.

A: 0.5% or less
B: 0.5% to 1.0%
C: 1.0% or more

$\Delta$haze before and after Heating

A resin film (thickness: 75 $\mu$m) was cut to 100 mm $\times$ 100 mm to prepare a test specimen and heated in an oven set to 100°C for 30 minutes. The haze of the sample immediately after heating was measured, and the difference between the measured haze value and the haze value before heating was calculated as $\Delta$haze. The result was evaluated according to the following criteria.

A: 0.5% or less

B: more than 0.5% and less than 1.0%

C: 1.0% or more

Pencil Hardness of Film

A resin film (75 μm) was cut to 10 cm × 10 cm to prepare a test specimen. The pencil hardness was measured in accordance with JIS K5600-5-4, and evaluated according to the following criteria.

A: 2B or more

C: 3B or less

Stress Whitening Resistance

A 75-μm-thick film was bent at room temperature (23°C) to an angle of 90°, and whether whitening was present at the folded portion was examined.

A: No whitening occurred.

C: Whitening was observed.

MIT Bendability

A test specimen was taken from the center of a 75-μm-thick film. The number of times the film was bent in a direction perpendicular to the flow direction of the film was measured in accordance with ISO 5626 (JIS P8115(2001)) and evaluated according to the following criteria.

H: 60 times or more

A: 30 times or more

C: less than 30 times

Moldability: 250% Stretchability

A molded resin article (film with a thickness of 75 μm) was cut to 20 cm × 30 cm, and one side of the cut piece was treated with corona discharge, followed by vapor-depositing aluminum on it by a vacuum deposition method, thereby obtaining a laminated film. The aluminum layer had a thickness of 30 nm. The laminated film was cut to 100 mm × 100 mm to prepare a test specimen, and the test specimen was set on a biaxial-stretching birefringence measurement system (SDR-563K; Eto Co., Ltd.). The test specimen was stretched at a temperature of 145°C, at a draw rate of 3600%/min, and in a draw ratio of 250%. Five test specimens were stretched by this method and evaluated as described below.

A: Not a single specimen was broken.

B: One or two specimens were broken.

C: Three or more specimens were broken.

Post-molding Appearance: Vapor Deposition Properties

The laminated film obtained above was placed on white paper (C2r; FUJI Xerox), and the mirror gloss of the non-vapor-deposited surface was visually evaluated under fluorescent light (200 lux).

A: Mirror gloss was observed (with no whitening).

B: Mirror gloss was somewhat observed (with no whitening).

C: No mirror gloss was observed (with whitening).

Average Particle Size of Rubber Component Layer (b1)

Cross-sectional segments (thickness: 50 nm), the plane of which was parallel to the extrusion direction, were prepared from the films (thickness: 75 μm) produced in the Examples and Comparative Examples, described later, by using an ultramicrotome (Leica EM UC7rt; JEOL Ltd.). The prepared segments were subjected to electron staining with a 10% aqueous solution of phosphotungstic acid, and the shape of the stained portions (morphology) was observed with an electronic microscope (JEOL Ltd; main unit: JSM-7600F, detector: SM-74240RTED). The average particle size of 30 particles of stained portions among the observed stained spherical portions was measured and determined to be the average particle size of a rubber component layer (b1).

Production Example 1: Acrylic Multilayer Polymer (B-1)

150 parts by mass of deionized water, 0.10 parts by mass of sodium polyoxyethylene tridecyl ether acetate, and 0.05 parts by mass of sodium carbonate were placed in a reactor equipped with a stirrer, a thermometer, a nitrogen gas-feeding tube, a monomer-feeding tube, and a reflux condenser. The atmosphere inside the reactor was sufficiently replaced with nitrogen gas to make it substantially oxygen-free, followed by setting the internal temperature to 80°C. 0.01 parts by mass of potassium persulfate were then added thereto and stirred for 5 minutes. Thereafter, 10 parts by mass of a mixture composed of methyl methacrylate, methyl acrylate, and allyl methacrylate in a mass ratio of 93.9/6.1/0.2 were continuously added dropwise over a period of 50 minutes. After completion of the dropwise addition, a reaction was allowed to proceed for about 30 minutes until the polymerization rate reached at least 98%.

Subsequently, 0.05 parts by mass of potassium persulfate were added to the same reactor and stirred for 5 minutes. Thereafter, 50 parts by mass of a mixture composed of n-butyl acrylate, styrene, and allyl methacrylate in a mass ratio of 82.2/17.8/4.0 were continuously added dropwise over a period of 90 minutes. After completion of the dropwise addition, a reaction was allowed to proceed for about 60 minutes until the polymerization rate reached at least 98%.

Subsequently, 0.04 parts by mass of potassium persulfate were added to the same reactor and stirred for 5 minutes. Thereafter, 40 parts by mass of a mixture composed of methyl methacrylate, methyl acrylate, and n-octyl mercaptan in a mass ratio of 94.0/6.0/0.3 were continuously added dropwise over a period of 30 minutes. After completion of the dropwise addition, a reaction was allowed to proceed for about 60 minutes until the polymerization rate reached at least 98%. Latex containing multilayered particles (B-1) with a volume average particle size of 110 nm was obtained. The average particle size of the rubber component layer (b-1) was 80 nm.

Production Example 2: Acrylic Multilayer Polymer (B-2)

150 parts by mass of deionized water, 0.03 parts by mass of sodium polyoxyethylene tridecyl ether acetate, and 0.05 parts by mass of sodium carbonate were placed in a reactor equipped with a stirrer, a thermometer, a nitrogen gas-feeding tube, a monomer-feeding tube, and a reflux condenser. The atmosphere inside the reactor was sufficiently replaced with nitrogen gas to make it substantially oxygen-free, followed by setting the internal temperature to 80°C. 0.01 parts by mass of potassium persulfate were then added thereto and stirred for 5 minutes. Thereafter, 10 parts by mass of a mixture composed of methyl methacrylate, methyl acrylate, and allyl methacrylate in a mass ratio of 93.9/6.1/0.2 were continuously added dropwise over a period of 50 minutes. After completion of the dropwise addition, a reaction was allowed to proceed for about 30 minutes until the polymerization rate reached at least 98%.

Subsequently, 0.05 parts by mass of potassium persulfate were added to the same reactor and stirred for 5 minutes. Thereafter, 50 parts by mass of a mixture composed of n-butyl acrylate, styrene, and allyl methacrylate in a mass ratio of 82.2/17.8/4.0 were continuously added dropwise over a period of 90 minutes. After completion of the dropwise addition, a reaction was allowed to proceed for about 60 minutes until the polymerization rate reached at least 98%.

Subsequently, 0.04 parts by mass of potassium persulfate were added to the same reactor and stirred for 5 minutes. Thereafter, 40 parts by mass of a mixture composed of methyl methacrylate, methyl acrylate, and n-octyl mercaptan in a mass ratio of 94.0/6.0/0.3 were continuously added dropwise over a period of 30 minutes. After completion of the dropwise addition, a reaction was allowed to proceed for about 60 minutes until the polymerization rate reached at least 98%. Latex containing multilayered polymer particles (B-2) with a volume average particle size of 220 nm was obtained. The average particle size of the rubber component layer (b-1) was 200 nm.

Production Example 3: Methacrylic Resin (A-1)

Methacrylic Resin (A-1): A methacrylic copolymer composed of a methyl methacrylate (MMA) unit (content: 99.3 mass%) and a methyl acrylate (MA) unit (content: 0.7 mass%) with Mw = 84,000 and Mw/Mn = 2.1 was produced in accordance with an ordinary method.

Production Example 4: Methacrylic Resin (A-2)

Methacrylic Resin (A-2): A methacrylic copolymer composed of a methyl methacrylate (MMA) unit (content:

93.6 mass%) and a methyl acrylate (MA) unit (6.4 mass%) with Mw = 120,000 and Mw/Mn = 2.1 was produced in accordance with an ordinary method.

Production Example 5: Block Copolymer (C-1)

Block Copolymer (C-1): A diblock copolymer composed of [methyl methacrylate (MMA) polymer block (c1)]-[n-butyl acrylate (BA)-benzyl acrylate (BzA) copolymer block (c2)] with a weight average molecular weight (Mw) of 120,000, a polymer block mass ratio (c1):(c2) of 50:50, and a monomer mass ratio (MMA:BA) of 50:50 was produced in accordance with an ordinary method.

Production Example 6: Block Copolymer (C-2)

Block Copolymer (C-2): A triblock copolymer composed of [methyl methacrylate (MMA) polymer block (c1)]-[n-butyl acrylate (BA) polymer block (c2)]-[methyl methacrylate (MMA) polymer block (c1)] with a weight average molecular weight (Mw) of 70,000, a polymer block mass ratio (b1):(b2):(b1) of 14.3:50.0:35.7, and a monomer mass ratio MMA:BA of 50:50.

Production Example 7: Block Copolymer (C-3)

Block Copolymer (C-3): A triblock copolymer composed of [methyl methacrylate (MMA) polymer block (c1)]-[n-butyl acrylate (BA) polymer block (c2)]-[methyl methacrylate (MMA) polymer block (c1)] with a weight average molecular weight (Mw) of 65,000, a polymer block mass ratio (c1):(c2):(c1) of 15:70:15, and a monomer mass ratio MMA:BA of 30:70.

Production Example 8: Block Copolymer (C-4)

Block Copolymer (C-4): A triblock copolymer composed of [methyl methacrylate (MMA) polymer block (c1)]-[n-butyl acrylate (BA) polymer block (c2)]-[methyl methacrylate (MMA) polymer block (c1)] with a weight average molecular weight (Mw) of 120,000, a polymer block mass ratio (c1):(c2):(c1) of 8.5:83:8.5, and a monomer mass ratio MMA:BA of 17:83.

Example 1

47 parts of pellets of the acrylic multilayered polymer (B-1), 50 parts of the methacrylic resin (A-1) (MMA-derived structural unit: 100%, weight average molecular weight: 80,000), and 3 parts of pellets of the acrylic block copolymer (C-1) were kneaded with a twin-screw extruder and formed into pellets with a pelletizer, thereby obtaining a thermoplastic resin (R1).
The thermoplastic resin (R1) was melt-extruded by using a single-shaft vented extruder (screw diameter: 50 mm) and a T die (width: 500 mm; lip aperture: 0.5 mm) at a discharge rate of 40 kg/h and at a resin temperature of 260°C, thereby obtaining a melt in a film form. The shear rate was 480/s. Subsequently, the melt was then pressed under a linear pressure of 30 kg/cm with a first nip roll formed of a mirror-finished elastic metal roll adjusted to 85°C and a mirror-finished rigid metal roll adjusted to 90°C (spacing between the rolls: 50 $\mu$m), and then pressed under a linear pressure of 30 kg/cm with a second nip roll formed of a mirror-finished rigid metal roll adjusted to 90°C and a mirror-finished rigid metal roll adjusted to 85°C (spacing between the rolls: 50 $\mu$m), thereby obtaining a monolayered resin film (1) with a thickness of 75 $\mu$m (acetone-insoluble matter: 28%) .
The morphology of the block copolymer of the obtained resin film (1) was examined by the measurement method described above. The block copolymer was found to be dispersed in a form of spheres with a diameter of 20 nm. The film was evaluated in various aspects. Table 1 shows the evaluation results. The resin film (1) was excellent in transparency, surface hardness, stress whitening resistance, and bendability.

Example 2

A resin film (2) (acetone-insoluble matter: 28%) was obtained in the same manner as in Example 1, except that the block copolymer C-2 was used as the acrylic block copolymer. The morphology of the block copolymer of the obtained resin film (2) was examined by the measurement method described above. The block copolymer was found to be dispersed in a form of cylinders with a short axis diameter of 20 nm and a length of 100 nm. Table 1 shows the evaluation results. The resin film (2) was excellent in transparency, surface hardness, stress whitening resistance, and bendability.

Example 3

A resin film (3)(acetone-insoluble matter: 29%) was obtained in the same manner as in Example 1, except that the amount of the acrylic multilayered polymer (B-1) was changed to 49 parts, and that 1 part of the block copolymer C-3 was used as the acrylic block copolymer. The morphology of the block copolymer of the obtained resin film (3) was examined by the measurement method described above. The block copolymer was found to be dispersed in a form of cylinders with a short axis diameter of 20 nm and a length of 100 nm. Table 1 shows the evaluation results. The resin film (3) was excellent in transparency, surface hardness, stress whitening resistance, and bendability.

Example 4

A resin film (4)(acetone-insoluble matter: 39%) was obtained in the same manner as in Example 1, except that the amount of the acrylic multilayered polymer (B-1) was changed to 65 parts, the amount of the methacrylic resin (A-1) was changed to 30 parts, and 5 parts of the acrylic block copolymer (C-2) were used. The morphology of the block copolymer of the obtained resin film (4) was examined by the measurement method described above. The block copolymer was found to be dispersed in a form of cylinders with a short axis diameter of 20 nm and a length of 200 nm. Table 1 shows the evaluation results. The resin film (4) was excellent in transparency, surface hardness, stress whitening resistance, and, in particular, bendability.

Example 5

A resin film (5)(acetone-insoluble matter: 36%) was obtained in the same manner as in Example 1, except that the amount of the acrylic multilayered polymer (B-1) was changed to 60 parts, the amount of the methacrylic resin (A-1) was changed to 30 parts, and the amount of the acrylic block copolymer (C-1) was changed to 10 parts. The morphology of the block copolymer of the obtained resin film (5) was examined by the measurement method described above. The block copolymer was found to be dispersed in a form of cylinders with a short axis diameter of 20 nm and a length of 300 nm. Table 1 shows the evaluation results. The resin film (5) was excellent in transparency, surface hardness, stress whitening resistance, and, in particular, bendability.

Example 6

A resin film (6) (acetone-insoluble matter: 28%) was obtained in the same manner as in Example 1, except that 50 parts of the methacrylic resin (A-2) were used, and 3 parts of the acrylic block copolymer (C-2) were used. The morphology of the block copolymer of the obtained resin film (6) was examined by the measurement method described above. The block copolymer was found to be dispersed in a form of cylinders with a short axis diameter of 20 nm and a length of 200 nm. Table 1 shows the evaluation results. The resin film (6) was excellent in transparency, surface hardness, stress whitening resistance, and, in particular, bendability.

Example 7

A resin film (7)(acetone-insoluble matter: 27%) was obtained in the same manner as in Example 1, except that the amount of the acrylic multilayered polymer (B-1) was changed to 40 parts, 5 parts of the acrylic multilayered polymer (B-2) were used, and 5 parts of the acrylic block copolymer (C-2) were used. The morphology of the block copolymer of the obtained resin film (7) was examined by the measurement method described above. The block copolymer was found to be dispersed in the form of cylinders with a short axis diameter of 20 nm and a length of 200 nm. Table 1 shows the evaluation results. The resin film (7) was excellent in pencil hardness, stress whitening resistance, and in particular bendability, although the transparency was slightly inferior.

Comparative Example 1

A resin film (8)(acetone-insoluble matter: 28%) was obtained in the same manner as in Example 1, except that 50 parts of the methacrylic resin (A-2) were used, and 5 parts of the acrylic block copolymer (C-3) were used. The morphology of the block copolymer of the obtained resin film (8) was examined by the measurement method described above. The block copolymer was found to be dispersed in the form of cylinders with a short axis diameter of 30 nm and a length of 1000 nm or more. Table 1 shows the evaluation results. The dispersed particles of the block copolymer in the resin film (8) had a large particle size, and whitening occurred when the resin film (8) was bent.

Comparative Example 2

A resin film (9) (acetone-insoluble matter: 22%) was obtained in the same manner as in Example 1, except that the amount of the acrylic multilayered polymer (B-1) was changed to 37 parts, and 10 parts of the acrylic block copolymer (C-2) were used. The morphology of the block copolymer of the obtained resin film (9) was examined by the measurement method described above. The block copolymer was found to be dispersed in the form of cylinders with a short axis diameter of 40 nm and a length of 600 nm or more. Table 1 shows the evaluation results. The dispersed particles of the block copolymer in the resin film (9) had a large particle size, and whitening occurred when the resin film (9) was bent.

Comparative Example 3

A resin film (10)(acetone-insoluble matter: 37%) was obtained in the same manner as in Example 1, except that 40 parts of the acrylic multilayered polymer (B-1) were used, and 10 parts of the acrylic multilayered polymer (B-2) were used instead of the acrylic block copolymer. Table 1 shows the evaluation results. The transparency of the resin film (10) was deteriorated because of the addition of the multilayered polymer with a large particle size.

Comparative Example 4

A resin film (11) (acetone-insoluble matter: 30%) was obtained in the same manner as in Example 1, except that the amount of the acrylic multilayered polymer (B-1) was changed to 50 parts, and the amount of the acrylic block copolymer was changed to 0 parts. Table 1 shows the evaluation results. The resin film (11) was inferior in bendability and expected to crack easily during processing because of the absence of the block copolymer.

Comparative Example 5

A resin film (12) (acetone-insoluble matter: 54%) was obtained in the same manner as in Example 1, except that the amount of the acrylic multilayered polymer (B-1) was changed to 90 parts, the amount of the methacrylic resin (A-1) was changed to 10 parts, and the amount of the acrylic block copolymer was changed to 0 parts. Table 1 shows the evaluation results. The resin film (12) was excellent in bendability, but exhibited deteriorated surface hardness because of the high content of the multilayered polymer.

Comparative Example 6

A resin film (13) with a thickness of 75 $\mu$m (acetone-insoluble matter: 36%) was obtained in the same manner as in Example 5, except that the lip aperture was changed to 1.5 mm. The morphology of the block copolymer of the obtained resin film (13) was examined by the measurement method described above. The block copolymer was found to be dispersed in a form of spheres with a diameter of 200 nm. Table 1 shows the evaluation results. The dispersed particles of the block copolymer in the resin film (13) had a large particle size, and whitening occurred when the resin film (13) was bent.

Example 8

A resin film (14) (acetone-insoluble matter: 28.8 mass%) was obtained in the same manner as in Example 1, except that 48 parts of pellets of the multilayered polymer particles (B-1), 50 parts of pellets of the methacrylic resin (A-1), and 2 parts of pellets of the block copolymer (C-2) were used. Table 1 shows the evaluation results. The resin film (14) was excellent in transparency, surface hardness, moldability, and vapor deposition properties.

Example 9

A resin film (15) (acetone-insoluble matter: 39.6 mass%) was obtained in the same manner as in Example 1, except that 66 parts of pellets of the multilayered polymer particles (B-1), 30 parts of pellets of the methacrylic resin (A-2), and 4 parts of pellets of the block copolymer (C-2) were used. Table 1 shows the evaluation results. The resin film (15) was excellent in transparency, surface hardness, moldability, and vapor deposition properties.

Example 10

A resin film (16) (acetone-insoluble matter: 27.0 mass%) was obtained in the same manner as in Example 1, except that 45 parts of pellets of the multilayered polymer particles (B-1), 52 parts of pellets of the methacrylic resin (A-2), and 3 parts of pellets of the acrylic block copolymer (C-3) were used. Table 1 shows the evaluation results. The resin film (16) was excellent in transparency, surface hardness, moldability, and vapor deposition properties.

Example 11

A resin film (17) (acetone-insoluble matter: 16.8 mass%) was obtained in the same manner as in Example 1, except that 30 parts of pellets of the multilayered polymer particles (B-1), 66 parts of pellets of the methacrylic resin (A-1), and 4 parts of pellets of the block copolymer (C-2) were used. Table 1 shows the evaluation results. The resin film (17) was excellent in transparency, surface hardness, moldability, and vapor deposition properties.

Example 12

A resin film (18) (acetone-insoluble matter: 27.0 mass%) was obtained in the same manner as in Example 1, except that 45 parts of pellets of the multilayered polymer particles (B-1), 51 parts of pellets of the methacrylic resin (A-2), and 4 parts of pellets of the acrylic block copolymer (C-4) were used. Table 1 shows the evaluation results. The resin film (18) was excellent in surface hardness, moldability, and vapor deposition properties, although the haze was slightly inferior.

Comparative Example 7

A resin film (19) (acetone-insoluble matter: 23.8 mass%) was obtained in the same manner as in Example 1, except that 36 parts of pellets of the multilayered polymer particles (B-2), 59 parts of pellets of the methacrylic resin (A-2), and 5 parts of pellets of the block copolymer (C-2) were used. Table 1 shows the evaluation results. The resin film (19) had an increased haze after heating and clouded appearance after deposition and molding.

Comparative Example 8

A resin film (20) (acetone-insoluble matter: 48.0 mass%) was obtained in the same manner as in Example 1, except that 80 parts of pellets of the multilayered polymer particles (B-1), and 20 parts of pellets of the methacrylic resin (A-2) were used. Table 1 shows the evaluation results. The resin film (20) had a low level of pencil hardness and clouded post-molding appearance.

Comparative Example 9

A resin film (21) (acetone-insoluble matter: 0 mass%) was obtained in the same manner as in Example 1, except that 85 parts of pellets of the methacrylic resin (A-1), and 15 parts of pellets of the block copolymer (C-2) were used. Table 1 shows the evaluation results. The resin film (21) was very brittle and cracked during molding.

Comparative Example 10

A resin film (22) (acetone-insoluble matter: 18.0 mass%) was obtained in the same manner as in Example 1, except that 30 parts of pellets of the multilayered polymer particles (B-1), 20 parts of pellets of the methacrylic resin (A-1), and 50 parts of pellets of the block copolymer (C-2) were used. Table 1 shows the evaluation results. The resin film (22) had a decreased level of pencil hardness.

Table 1

| | | Mw | Example 1 | Example 2 | Example 3 | Example 4 | Example 5 | Example 6 | Example 7 |
|---|---|---|---|---|---|---|---|---|---|
| Methacrylic Resin | A-1 | 90000 | 50 | 50 | 50 | 30 | 30 | | 50 |
| | A-2 | 120000 | | | | | | 50 | |
| | | Rubber Layer Particle Size | | | | | | | |
| Acrylic Multilayer Polymer | B-1 | 80 nm | 47 | 47 | 49 | 65 | 60 | 47 | 40 |
| | B-2 | 200 nm | | | | | | | 5 |
| Acetone-insoluble Matter | | | 28.2 | 28.2 | 29.4 | 39 | 36 | 28.2 | 27.3 |
| | | Acrylate Component | | | | | | | |
| Acrylic Block Copolymer | C-1 | 50% | 3 | | | | 10 | | |
| | C-2 | 50% | | 3 | | 5 | | 3 | 5 |
| | C-3 | 70% | | | 1 | | | | |
| Morphology | | | Sphere | Cylinder | Cylinder | Cylinder | Cylinder | Cylinder | Cylinder |
| (Diameter or Length) | | | 20 nm | 100 nm | 100 nm | 200 nm | 300 nm | 200 nm | 200 nm |

| | | | | | | | | |
|---|---|---|---|---|---|---|---|
| Haze | A | A | A | A | A | A | B |
| ΔHaze before and after Heating | A | A | A | A | A | A | A |
| Stress Whitening Resistance | A | A | A | A | A | A | B |
| Pencil Hardness | A | A | A | A | A | A | A |
| MIT Bendability | A | A | A | H | H | H | H |
| Moldability (250% Stretchability) | A | A | A | A | A | A | A |
| Post-molding Appearance (Vapor Deposition Properties) | A | A | A | A | A | A | A |

(Continued from Table 1)

| | | Mw | Comparative Example 1 | Comparative Example 2 | Comparative Example 3 | Comparative Example 4 | Comparative Example 5 | Comparative Example 6 |
|---|---|---|---|---|---|---|---|---|
| Methacrylic Resin | A-1 | 90000 | | 50 | 50 | 50 | 10 | 30 |
| | A-2 | 120000 | 50 | | | | | |
| | | Rubber Layer Particle Size | | | | | | |
| Acrylic Multilayer Polymer | B-1 | 80 nm | 47 | 37 | 40 | 50 | 90 | 60 |
| | B-2 | 200 nm | | | 10 | | | |
| Acetone-insoluble Matter | | | 28.2 | 22.2 | 30.6 | 30 | 54 | 36 |
| | | Acrylate Component | | | | | | |
| Acrylic Block Copolymer | C-1 | 50% | | | None | None | None | 10 |
| | C-2 | 50% | | 10 | | | | |
| | C-3 | 70% | 5 | | | | | |
| Morphology | | | Cylinder | Cylinder | — | — | — | Sphere |
| (Diameter or Length) | | | >1000 nm | 600 nm | — | — | — | 200 nm |

| Haze | | | A | A | C | A | A | A |
|---|---|---|---|---|---|---|---|---|
| ΔHaze before and after Heating | | | C | C | C | A | A | A |
| Stress Whitening Resistance | | | C | C | C | A | A | C |
| Pencil Hardness | | | A | A | A | A | C | A |
| MIT Bendability | | | A | A | A | C | A | H |
| Moldability (250% Stretchability) | | | A | A | A | C | A | A |
| Post-molding Appearance (Vapor Deposition Properties) | | | C | C | C | A | A | A |

(Continued from Table 1)

| | | Mw | Example 8 | Example 9 | Example 10 | Example 11 | Example 12 |
|---|---|---|---|---|---|---|---|
| PMMA | A-1 | 90K | 50 | | | 66 | |
| | A-2 | 120K | | 30 | 52 | | 51 |
| | | C/S Particle Size | | | | | |
| C/S | B-1 | 80 nm | 48 | 66 | 45 | 30 | 45 |
| | B-2 | 200 nm | | | | | |
| | | Hard Component | | | | | |
| BCP | C-2 | 50% | 2 | 4 | | 4 | |
| | C-3 | 31% | | | 3 | | |
| | C-4 | 17% | | | | | 4 |
| Acetone-insoluble Matter (Mass%) | | | 28.8 | 39.6 | 27.0 | 18.0 | 27.0 |
| Morphology | | | Sphere | Cylinder | Cylinder | Cylinder | Cylinder |
| (Diameter or Length) | | | 20 nm | 200 nm | 200 nm | 100 nm | 500 nm |

| Haze | | H | H | H | H | A |
|---|---|---|---|---|---|---|
| ΔHaze before and after Heating | | A | A | A | A | A |
| Stress Whitening Resistance | | A | A | A | A | A |
| Pencil Hardness | | A | A | A | A | A |
| MIT Bendability | | A | A | A | A | A |
| Moldability (250% Stretchability) | | A | A | A | A | A |
| Post-molding Appearance (Vapor Deposition Properties) | | A | A | A | A | A |

(Continued from Table 1)

| | | Mw | Comparative Example 7 | Comparative Example 8 | Comparative Example 9 | Comparative Example 10 |
|---|---|---|---|---|---|---|
| PMMA | A-1 | 90K | | | 85 | 20 |
| | A-2 | 120K | 59 | 20 | | |
| | | C/S Particle Size | | | | |
| C/S | B-1 | 80 nm | | 80 | — | 30 |
| | B-2 | 200 nm | 36 | | | — |
| | | Hard Component | | | | |
| BCP | C-2 | 50% | 5 | — | 15 | 50 |
| | C-3 | 31% | | — | | |
| | C-4 | 17% | | | | |
| Acetone-insoluble Matter (Mass%) | | | 23.8 | 48.0 | - | 18.0 |
| Morphology | | | Cylinder | — | Cylinder | Cylinder |
| (Diameter or Length) | | | 200 nm | — | 300 nm | >1000 nm |

| | | Comparative Example 7 | Comparative Example 8 | Comparative Example 9 | Comparative Example 10 |
|---|---|---|---|---|---|
| Haze | | H | H | H | H |
| ΔHaze before and after Heating | | C | A | A | A |
| Stress Whitening Resistance | | C | A | A | A |
| Pencil Hardness | | A | C | A | C |
| MIT Bendability | | A | A | C | A |
| Moldability (250% Stretchability) | | A | A | C | A |
| Post-molding Appearance (Vapor Deposition Properties) | | C | C | A | A |

The results above show that the film according to the present invention is excellent in transparency, surface smoothness, bending whitening resistance, pencil hardness, bendability, moldability, and post-molding appearance, and is suitable for use in decoration.

**Claims**

1. A methacrylic melt-extrusion-molded article comprising

a methacrylic resin (A) that contains 80 mass% or more of a methyl methacrylate unit and that has a weight average molecular weight of 50,000 or more and 500,000 or less;
an acrylic multilayered polymer (B) that contains at least one rubber component layer (b1) inside the polymer and that further comprises at least one thermoplastic resin component layer (b2), wherein the outermost part of the polymer comprises the thermoplastic resin component layer (b2), and the rubber component layer (b1) has an average particle size in the range of 0.05 to 0.15 μm; and
an acrylic block copolymer (C) that contains a methacrylic acid ester polymer block (c1) and an acrylic acid ester polymer block (c2),

wherein the molded article has an acetone-insoluble content of 1 to 60 mass%, and
the acrylic acid ester polymer block (c2) is in the form of spheres or cylinders in a cross-section parallel to the extrusion direction of the molded article, wherein the spheres have a diameter of 1 nm or more and 100 nm or less and the cylinders have a short axis diameter of 1 nm or more and 100 nm or less and a length of 10 nm or more and 500 nm or less.

2. The methacrylic melt-extrusion-molded article according to claim 1,

wherein the rubber component (b1) of the acrylic multilayered polymer (B) comprises a copolymer comprising 50 to 98.99 mass% of an acrylic acid ester monomer unit, 1 to 44.99 mass% of at least one additional monofunctional monomer unit, and 0.01 to 10 mass% of a polyfunctional monomer unit, and
the thermoplastic resin component layer (b2) of the acrylic multilayered polymer (B) comprises a copolymer comprising 40 to 100 mass% of a methacrylic acid ester monomer unit and 60 to 0 mass% of at least one additional monomer unit.

3. The methacrylic melt-extrusion-molded article according to claim 1,

wherein the acrylic block copolymer (C) comprises at least one methacrylic acid ester polymer block (c1) and at least one acrylic acid ester polymer block (c2);
the methacrylic acid ester polymer block (c1) is present in an amount of 30 to 60 mass% and the acrylic acid ester polymer block (c2) is present in an amount of 40 to 70 mass% in the acrylic block copolymer (C); and
the methacrylic melt-extrusion-molded article contains the acrylic block copolymer (C) in an amount of 1 to 15 mass%.

4. The methacrylic melt-extrusion-molded article according to claim 1, wherein the methacrylic melt-extrusion-molded article has a thickness of 20 to 200 $\mu$m.

5. The methacrylic melt-extrusion-molded article according to any one of claims 1 to 4, further comprising a delusterant.

6. The methacrylic melt-extrusion-molded article according to any one of claims 1 to 5, further comprising a functional layer.

7. The methacrylic melt-extrusion-molded article according to any one of claims 1 to 6, wherein the methacrylic melt-extrusion-molded article comprises a film and is formed of a laminate of the film and at least one additional thermoplastic resin film.

8. The methacrylic melt-extrusion-molded article according to any one of claims 1 to 7, which is for use in decoration.

9. The methacrylic melt-extrusion-molded article according to any one of claims 1 to 7, which is for use as a building material.

10. A method for producing a methacrylic melt-extrusion-molded article, the method comprising the step of melt-extruding a methacrylic resin composition using a T-die,

wherein the methacrylic resin composition comprises
a methacrylic resin (A) that contains 80 mass% or more of a methyl methacrylate unit and that has a weight average molecular weight of 50000 or more and 500000 or less;
an acrylic multilayered polymer (B) that contains at least one rubber component layer (b1) inside the polymer and that further comprises at least one thermoplastic resin component layer (b2), wherein the outermost part of the polymer comprises the thermoplastic resin component layer (b2); and
an acrylic block copolymer (C) that contains a methacrylic acid ester polymer block (c1) and an acrylic acid ester polymer block (c2), and
wherein in the melt-extrusion step, shear is applied during discharge from a die at a rate in the range of 200 to 650/s.

Fig. 1

Fig. 2

<table>
<tr><td colspan="2" align="center">**INTERNATIONAL SEARCH REPORT**</td><td colspan="2">International application No.<br><br>PCT/JP2020/028397</td></tr>
</table>

A.  CLASSIFICATION OF SUBJECT MATTER
CO8F  265/06(2006.01)i;  C08L  33/08(2006.01)i;  C08L  33/10(2006.01)i;  C08L
33/12(2006.01)i;  C08L  51/04(2006.01)i;  C08L  53/00(2006.01)i;  C08J
5/00(2006.01)i;  C08J  5/18(2006.01)i;  B29C  48/08(2019.01)i;  B29C
48/92(2019.01)i
FI:      C08J5/00  CEY;  C08L51/04;  C08L33/12;  C08L53/00;  B29C48/92;
         B29C48/08;  C08L33/08;  C08F265/06;  C08J5/18;  C08L33/10
According to International Patent Classification (IPC) or to both national classification and IPC

B.  FIELDS SEARCHED

Minimum documentation searched (classification system followed by classification symbols)
C08F265/06;   C08L33/08;   C08L33/10;   C08L33/12;   C08L51/04;   C08L53/00;
C08J5/00; C08J5/18; B29C48/08; B29C48/92

Documentation searched other than minimum documentation to the extent that such documents are included in the fields searched
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | WO 2016/080124 A1 (KURARAY CO., LTD.) 26.05.2016 (2016-05-26) entire text, in particular, claims, paragraphs [0001]-[0002], [0016]-[0085], [0109], [0114]-[0152] | 1-10 |
| A | WO 2017/188290 A1 (KURARAY CO., LTD.) 02.11.2017 (2017-11-02) entire text | 1-10 |
| A | WO 2018/074550 A1 (KURARAY CO., LTD.) 26.04.2018 (2018-04-26) entire text | 1-10 |
| A | WO 2012/057079 A1 (KURARAY CO., LTD.) 03.05.2012 (2012-05-03) entire text | 1-10 |
| A | JP 2004-091741 A (KURARAY CO., LTD.) 25.03.2004 (2004-03-25) entire text | 1-10 |

☒  Further documents are listed in the continuation of Box C.      ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>24 September 2020 (24.09.2020) | Date of mailing of the international search report<br>06 October 2020 (06.10.2020) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

**INTERNATIONAL SEARCH REPORT**

International application No.

PCT/JP2020/028397

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2017-218504 A (KURARAY CO., LTD.) 14.12.2017 (2017-12-14) entire text | 1-10 |
| A | JP 2008-104622 A (ASAHI KASEI CHEMICALS CORP.) 08.05.2008 (2008-05-08) entire text | 1-10 |

Form PCT/ISA/210 (continuation of second sheet) (January 2015)

<table>
<tr><td colspan="2"><strong>INTERNATIONAL SEARCH REPORT</strong><br>Information on patent family members</td><td>International application No.<br><em>PCT/JP2020/028397</em></td></tr>
</table>

| Patent Documents referred in the Report | Publication Date | Patent Family | Publication Date |
|---|---|---|---|
| WO 2016/080124 A1 | 26 May 2016 | CN 107109018 A<br>KR 10-2017-0088826 A<br>TW 201623415 A | |
| WO 2017/188290 A1 | 02 Nov. 2017 | US 2019/0136035 A1<br>entire text<br>EP 3450498 A1<br>CN 109071911 A<br>KR 10-2019-0003529 A | |
| WO 2018/074550 A1 | 26 Apr. 2018 | (Family: none) | |
| WO 2012/057079 A1 | 03 May 2012 | US 2013/0217827 A1<br>entire text<br>EP 2634214 A1<br>CN 103180382 A<br>KR 10-2013-0130725 A<br>TW 201224045 A | |
| JP 2004-091741 A | 25 Mar. 2004 | (Family: none) | |
| JP 2017-218504 A | 14 Dec. 2017 | (Family: none) | |
| JP 2008-104622 A | 08 May 2008 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019137232 A
- JP 2019173842 A
- JP 2001316557 A
- WO 2016157908 A
- JP 2003183471 A
- WO 2013051239 A